(19) Europäisches Patentamt
European Patent Office
Office européen des brevets

(11) EP 1 717 737 A1

(12) **EUROPEAN PATENT APPLICATION**

(43) Date of publication:
**02.11.2006 Bulletin 2006/44**

(51) Int Cl.:
***G06N 5/02*** *(2006.01)*

(21) Application number: **06252296.6**

(22) Date of filing: **28.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.04.2005 JP 2005130952**

(71) Applicant: **NEC CORPORATION**
**Minato-ku,**
**Tokyo 108-8001 (JP)**

(72) Inventors:
- **Yamashita, Yoshiko c/o Nec Corporation Tokyo 108-8001 (JP)**
- **Osoda, Tsutomu c/o Nec Corporation Tokyo 108-8001 (JP)**
- **Kuroiwa, Yukiko c/o Nec Corporation Tokyo 108-8001 (JP)**
- **Asogawa, Minoru c/o Nec Corporation Tokyo 108-8001 (JP)**

(74) Representative: **Moir, Michael Christopher et al**
**Mathys & Squire,**
**120 Holborn**
**London EC1N 2SQ (GB)**

(54) **Active learning method and active learning system**

(57) A learning data memory unit stores a set of learning data that are composed of a plurality of descriptors and a plurality of labels. When positive cases, in which the values of desired labels are desired values, are few in number or nonexistent in the learning data memory unit, a control unit rewrites the values of desired labels to values of other similar labels to generate provisional positive cases. An active learning unit uses the provisional positive cases and negative cases to learn rules, applies these learned rules to a set of candidate data that are stored in a candidate data memory unit in which desired labels are unknown to predict the resemblance of each item of candidate data to positive cases, and based on these prediction results, selects and supplies data that are to be learned next from an input/output device. The active learning unit subsequently, regarding data for which the actual values of the desired labels have been received as input from the input/output device, removes these data from the set of candidate data and adds these data to the set of learning data.

Fig. 1

120 processing device
130 memory device
150 control unit
151
learning settings acquisition unit
152
similarity information acquisition unit
153
data label conversion unit
110
input/output device
131
learning data memory unit
141
learning unit
142
prediction unit
143
candidate data selection unit
144
data updating unit
132
rule memory unit
133
candidate data memory unit
134
selection data memory unit
140 active learning unit

EP 1 717 737 A1

## Description

Background of the Invention:

1. Field of the Invention:

The present invention relates to machine learning, and more particularly to an active learning method and an active learning system.

**2. Description of the Related Art:**

Active learning is one form of a machine learning method in which the learner (a computer) can actively select learning data. Because it can improve the efficiency of learning in terms of the number of items of data or the amount of computation, active learning is receiving attention as a technology suitable for pharmacological screening for discovering particular active compounds for a specific protein from among a massive number of types of compounds (see, for example: Manfred K. Warmuth, "Active Learning with support Vector Machines in the Drug Discovery Process" in Journal of Chemical Information and Computer Sciences, Volume 43, Number 1, January 2003).

Data that are handled in an active learning system can be represented by a plurality of descriptors (attributes) and one or more labels. Descriptors characterize a data construct, and labels indicate states that relate to a certain aspect of the data. In the case of pharmacological screening by active learning, for example, in the data of each individual compound, a construct is specified by a plurality of descriptors that describe, for example, various physical chemistry constants such as molecular weight. Labels are used to indicate the presence or absence of activity with respect to, for example, specific proteins.

When the values that can be taken by labels are discrete such as "active" or "inactive," the labels are called "classes." On the other hand, when the values that can be taken by labels are continuous, the labels are called "function values." In other words, labels include classes and function values.

Data for which the values of labels are already known are called known data, and data for which the values of labels are unknown are called unknown data. In active learning, initial learning uses known data. The known data are distinguished between positive cases, which are data that are of value for the user, and negative cases, which are data of no value; and learning is realized by using both the negative cases and positive cases that are selected from the set of known data. Positive cases and negative cases are determined by the values of labels that are under study. When the value of labels that are of interest are binary, the values that are of interest to the user are positive cases, and values of no interest are negative cases. For example, assuming that a particular label indicates the presence or absence of activity with respect to a particular protein, when compounds that are active with respect to the protein are the objects of attention, the value "active" is a positive case, and the value "inactive" is a negative case. When a label has multiple values, one value that is of interest is a positive case, and all other values are negative cases. When the value that is obtained by a label is continuous, label values that exist within the vicinity of the value of interest are positive cases, and values in other locations are negative cases.

The target of learning by an active learning system that uses positive cases and negatives are the rules (hypotheses, regulations) for selecting, in response to the input of descriptors of any data, whether the values of labels of the data are values of interest or not, i.e., whether these data are positive cases or negative cases. In active learning at this time, ensemble learning is applied to generate (learn) a plurality of rules from learned data.

Two representative examples of ensemble learning are bagging and boosting.

When learning is carried out with known data and a plurality of rules are generated, this plurality of learned rules is applied to a multiplicity of items of data for which label values are unknown and the label values of the unknown data are predicted. The prediction results realized by the plurality of rules are integrated and shown quantitatively by numerical values referred to as "scores." Scores are numerical values of the resemblance to a positive case for each individual item of unknown data, higher scores indicating, for example, increasing likelihood that an item of unknown data is a positive case. Based on the prediction results of each item of unknown data, an active learning system selects from among unknown data and supplies the selected data as output data to enable efficient learning. A number of selection methods exist, including a method of selecting data for which prediction results are divided, a method of selection in the order of higher scores, and a method of selection using particular functions (See, for example, JP-A-H11-316754 and JP-A-2005-107743).

For the above-described output data for which the values of labels are unknown, the actual values of labels are checked by means of experimentation or investigation and these results are fed back to the learning system. The learning system removes the unknown data for which the actual values of labels have been found from the set of unknown data, mixes these data with the set of known data, and repeats the same operation as described above. In other words, the learning of a plurality of rules proceeds by using positive cases and negative cases that are reselected from the set of known data, and these rules are then applied to unknown data to perform prediction, following which data are selected and supplied as output based on the results of prediction. This process is repeated continuously until predetermined completion conditions are satisfied.

In an active learning system of the prior art, it was assumed that positive cases exist together with negative cases in the set of known data in the initial state that is the starting point of learning, and activating the system was inconceivable if absolutely no positive cases or only a very few positive cases existed. This was because activating the system in such a state would result in the learning of meaningless rules, resulting in the prediction of labels of unknown data according to meaningless rules. Even if data for use in learning were selected based on these prediction results, these unknown data would be essentially equivalent to randomly selected data. If the probability that selected data are positive cases is extremely low as for a case of random selection, the cost of learning increases greatly. In a field in which the cost for finding the values of unknown labels through experimentation is high, such as in pharmacological screening, the learning cost increases radically.

**Summary of the Invention:**

At least in its preferred embodiments, the present invention is directed toward ameliorating these problems of the prior art and has as its object the provision of an active learning system in which meaningful learning can be carried out even when exceedingly few or absolutely no positive cases or positive cases exist in the set of known data in the initial state at the start of learning.

An active learning system of the present invention comprises a control unit for treating as learning data data in which values of desired labels of data that are composed of a plurality of descriptors and a plurality of labels have been rewritten to values of other labels that indicate states of aspects that resemble aspects indicated by the desired labels and for generating a set of said learning data in a learning data memory unit; a candidate data memory unit for taking data for which said desired labels are unknown as candidate data and for storing a set of said candidate data; and an active learning unit that includes: a learning unit for, when data in which said desired labels are desired values are taken as positive cases and other data are taken as negative cases, using data of positive cases and negative cases that are stored in said learning data memory unit to learn rules for, in response to an input of descriptors of any data, calculating a resemblance of these data to positive cases; a prediction unit for applying rules that have been learned to a set of candidate data that are stored in said candidate data memory unit to predict the resemblance to positive cases of each item of candidate data; a candidate data selection unit for selecting data that are to be learned next based on prediction results; and a data update unit for supplying selected data from an output device, and for data in which an actual value of said desired label has been received as input from an input device, removing said data from the set of candidate data and adding to the set of learning data; wherein a repetition of active learning cycles is controlled by said control unit.

Said control unit may include: a learning settings acquisition unit for, based on information of said desired labels that has been received as input from said input device, examining a number of positive cases that are included in the set of learning data that have been stored beforehand in said learning data memory unit; a similarity information acquisition unit for receiving as input from said input device similarity information relating to other labels that resemble said desired labels when the number of positive cases that have been examined is less than a threshold value; and a data label conversion unit for rewriting values of said desired labels of learning data that are stored in said learning data memory unit to the values of other labels that are indicated by said similarity information.

Said control unit may receive from an outside device learning data in which the values of said desired labels have been rewritten to the values of other labels and saves the received data in said learning data memory unit.

Said control unit may include a data weighting unit for setting weights to said learning data whereby learning is carried out in said active learning unit that gives more importance to true positive cases in which said desired labels are actually desired values than to provisional positive cases in which said desired labels have become desired values as a result of rewriting with the values of other labels.

Said control unit may include a provisional settings batch release unit for determining whether predetermined provisional settings release conditions have been met or not during active learning by means of said active learning unit, and when said provisional settings batch release conditions have been met, performing a process to eliminate an influence upon learning caused by treating, of learning data that have been stored in said learning data memory unit, all learning data in which the values of said desired labels have been rewritten to the values of other labels as positive cases.

Said provisional settings batch release unit may restore all learning data for which the values of said desired labels have been rewritten to the values of other labels to a state that preceded rewriting.

Said provisional settings batch release unit, when said desired labels of learning data that have been restored to the state before rewriting are unknown, may move these learning data from said learning data memory unit to said candidate data memory unit.

Said control unit may include a provisional settings gradual release unit for, upon each completion of an active learning cycle by means of said active learning unit, determining whether provisional settings gradual release conditions that have been determined in advance have been met or not, and if said provisional settings gradual release conditions have been met, performing a process to gradually weaken an influence upon learning caused by treating as positive cases, of learning data that are stored in said learning data memory unit, learning data in which the values of said desired labels have been rewritten to values of other labels.

Said provisional settings gradual release unit may restore a portion of learning data, in which the values of said desired labels have been rewritten to values of other labels, to a state preceding rewriting.

Said provisional settings gradual release unit, when said desired labels of learning data that have been restored to a state before rewriting are unknown, may move these learning data from said learning data memory unit to said candidate data memory unit.

Said provisional settings gradual release unit may adjust weights of learning of learning data in which the values of said desired labels have been rewritten to the values of other labels.

An active learning method of the present invention, comprises the steps wherein: a) a control unit treats as learning data data in which values of desired labels of data composed of a plurality of descriptors and a plurality of labels have been rewritten to values of other labels that indicate states of aspects that resemble aspects indicated by the desired labels and generates a set of said learning data in a learning data memory unit; b) an active learning unit, when data in which said desired labels are desired values are taken as positive case and other data are taken as negative cases, uses data of positive cases and negative cases that are stored in said learning data memory unit to learn rules for, and, in response to an input of descriptors of any data, calculates a resemblance of these data to positive cases; c) said active learning unit applies said rules that have been learned to a set of candidate data that are stored in a candidate data memory unit for storing a set of said candidate data, said candidate data being data for which said desired labels are unknown, to predict the resemblance of each item of candidate data to positive cases; d) said active learning unit selects data that are to be learned next based on prediction results; e) said active learning unit supplies selected data as output from an output device, and regarding data in which actual values of said desired labels have been received as input from an input device, removes these data from the set of candidate data and adds these data to the set of learning data; and f) said control unit, based on completion conditions, controls a repetition of active learning cycles by said active learning unit.

Preferably, in said step "a", said control unit: based on information of said desired labels that has been received as input from said input device, examines a number of positive cases that are contained in the set of learning data that have been stored beforehand in said learning data memory unit; when the number of positive cases that have been examined is less than a threshold value, receives as input from said input device similarity information relating to other labels that resemble said desired labels; and rewrites the values of said desired labels of learning data that are stored in said learning data memory unit to the values of other labels that are indicated by said similarity information.

In step "a", said control unit may receive from an outside device learning data in which the values of said desired labels have been rewritten to the values of other labels and saves these learning data in said learning data memory unit.

The invention also includes a computer program or a carrier containing a program, for implementing a method as set forth above.

Action

The plurality of descriptors that constitute learning data specify, for example, the structure of the data, and each label indicates states that relate to each of different aspects of the data. It is here believed that the labels of different aspects will nevertheless tend to have values that are to some extent similar if the aspects resemble each other. Focusing on this point, the present invention replaces the values of the desired labels of learning data with the values of other labels that resemble the desired labels when exceedingly few or no positive cases (data for which the values of desired labels are desired values) exist in the set of known data in the initial state at the start of learning. By means of this substitution, when the values of the other similar labels are the same as the desired values of desired labels, the learning data following substitution becomes the same as positive cases, whereby the apparent number of positive cases can be increased. These positive cases are provisional positive cases and not true positive cases in which the desired labels are desired values, but a similarity relation exists between the desired labels and labels that are used for substitution, and the rules that are learned by using provisional positive cases are therefore rules having a certain degree of significance. As a result, data that are to be learned that have been selected from candidate data through the application of these rules have a higher probability of being positive cases than data that are selected at random, and learning efficiency is improved compared to random selection.

According to at least the preferred embodiments of the present invention, meaningful learning can be performed even when extremely few positive cases or no positive cases exist within the set of learning data in the initial state at the start of learning, whereby the efficiency of active learning can be improved.

The above and other objects, features, and advantages of the present invention will become apparent from the following description with reference to the accompanying drawings, which illustrate by way of example preferred embodiments of the present invention.

**Brief Description of the Drawings:**

FIG. 1 is a block diagram of an active learning system according to the first embodiment of the present invention;

FIG. 2 shows an example of the format of learning data handled in the present invention;

FIG. 3 shows an example of the content of a rule memory unit;

FIG. 4 is a flow chart showing an example of processing of an active learning system according to the first embodiment of the present invention;

FIG. 5 shows an example of the content of a learning data memory unit;

FIG. 6 shows an example of the content of a learning data memory unit after the label conversion process;

FIG. 7 is a block diagram of the active learning system according to the second embodiment of the present invention;

FIG. 8 shows an example of another format of learning data handled in the present invention;

FIG. 9 is a flow chart showing an example of the processing in the active learning system according to the second embodiment of the present invention;

FIG. 10 is a block diagram of the active learning system according to the third embodiment of the present invention;

FIG. 11 is a flow chart showing an example of the processing of the active learning system according to the third embodiment of the present invention;

FIG. 12 shows an example of the content of the learning data memory unit after learning has progressed a certain degree;

FIG. 13 shows an example of the content of the learning data memory unit after the process of batch release of provisional settings;

FIG. 14 is a block diagram of the active learning system according to the fourth embodiment of the present invention;

FIG. 15 is a flow chart showing an example of the processing in the active learning system according to the fourth embodiment of the present invention;

FIG. 16 is a block diagram of the active learning system according to the fifth embodiment of the present invention;

FIG. 17 shows another example of the content of the learning data memory unit;

FIG. 18 is a flow chart showing an example of the processing of the active learning system according to the fifth embodiment of the present invention;

FIG. 19 shows another example of the content of the learning data memory unit after the process of batch release of provisional settings;

FIG. 20 is a block diagram of the active learning system according to the sixth embodiment of the present invention; and

FIG. 21 is a block diagram of the active learning system according to the seventh embodiment of the present invention.

**Detailed Description of the Preferred Embodiments:**

**First Embodiment**

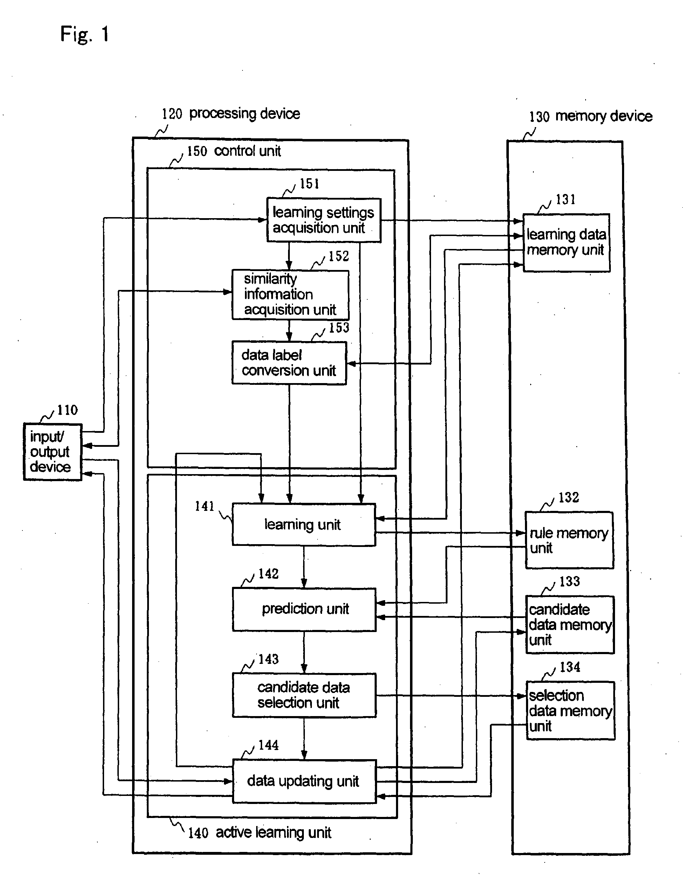

Referring now to FIG. 1, the active learning system according to the first embodiment of the present invention is of a configuration that includes: input/output device 110 that is made up from an input device such as a keyboard or mouse and an output device such as an LCD or printer; processing device 120 that operates under the control of a program; and memory device 130 that is made up from, for example, a semiconductor memory or magnetic disk.

Memory device 130 includes learning data memory unit 131; rule memory unit 132, candidate data memory unit 133, and selection data memory unit 134.

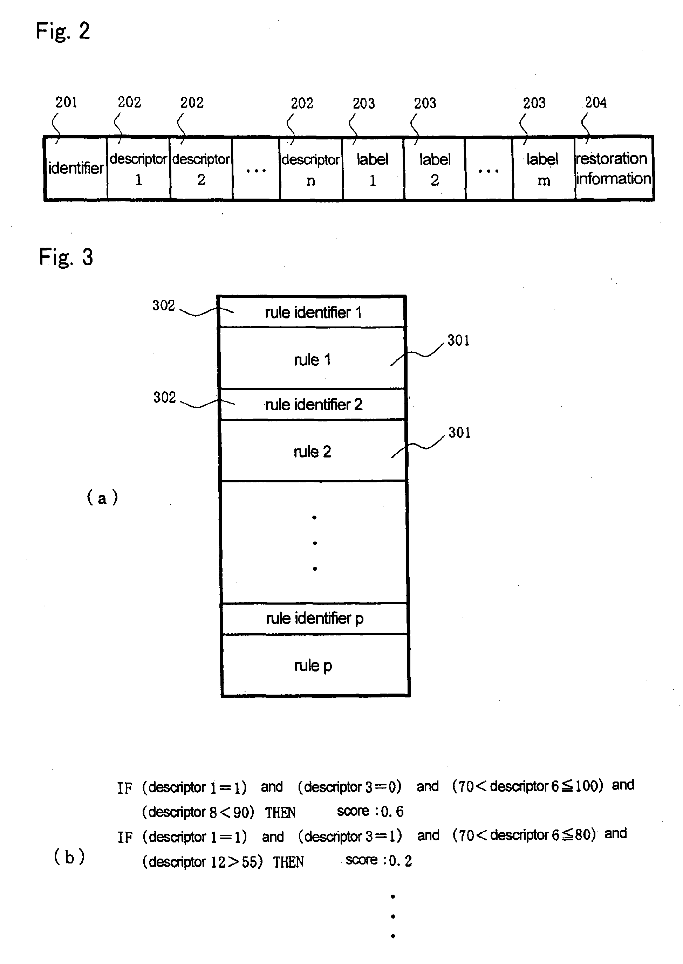

A set of learning data is stored in learning data memory unit 131. As shown in, for example, FIG. 2, each item of learning data is made up from: identifier 201 for uniquely identifying that item of relevant learning data; a plurality of descriptors 202; a plurality of labels 203, and restoration information 204. Descriptors 202 characterize the structure of the item of data. Labels 203 indicate states relating to certain aspects of that item of data and include classes or function values. Restoration information 204 is information for restoring a state in which the value of a certain label has been replaced by the value of another label to the state before substitution. Restoration information 204 records, for example, the number of the label that was the object of substitution and the original value at the time of converting the label, and is, for example, NULL when the label has not been converted. Restoration information 204 need not be held separately for each item of data, and may be stored separately from data.

Rule memory unit 132 stores the plurality of rules that have been learned by, for example, the bagging method using the learning data that have been stored in learning data memory unit 131. As shown in FIG. 3(a), each rule 301 is distinguished from other rules by rule identifier 302. Each rule 301 is for predicting, in response to the input of the plurality of descriptors 202 of any item of data, whether that item of data is a positive case, i.e., whether the value of a desired label is a desired value. An example of each of rules 301 is shown in FIG. 3(b). In this example, each rule 301 is a set of rules having the format "IF (condition statement) THEN (score)." A logic condition that takes a descriptor of the data as the variable is set in the condition statement. The score is a numerical value of the resemblance of the item of data to a positive case, and may be, for example, a value of from 0 to 1 that indicates by larger values increasing resemblance to a positive case.

Candidate data memory unit 133 stores a set of candidate data. Each item of candidate data has a structure such as shown in FIG. 2, similar to learning data. However, the candidate data differ from learning data in that, in learning data, labels (desired labels) for learning among the plurality of labels 203 are set to known, i.e., significant values, while in candidate data, the labels are still unknown, i.e., unset.

Selection data memory unit 134 is a portion for storing, of the candidate data that are stored in candidate data memory unit 133, data that have been selected by the system as data that are to be learned next.

Processing device 120 is made up from active learning unit 140 and control unit 150.

Active learning unit 140 executes, as one active learning cycle, processes for using the set of learning data to learn a plurality of rules, applying the learned rules to the set of candidate data to predict the resemblance of each item of candidate data to positive cases, selecting and supplying as output data that are to be learned next based on the prediction results; and removing from the set of candidate data those data for which the actual values of desired labels have been received as input and adding these data to the set of learning data. Active learning unit 140 is made up from: learning unit 141, prediction unit 142, candidate data selection unit 143, and data updating unit 144.

Learning unit 141 reads learning data from learning data memory unit 131, uses the learning data of positive cases and negative cases to learn a plurality of rules 301 for predicting, in response to the input of descriptors of any item of data, whether that item of data is a positive case or not, and saves these rules 301 in rule memory unit 132. When the active learning cycles are repeated, learning continues with the rules that have been saved in rule memory unit 132 as a base.

Prediction unit 142 both reads a plurality of rules from rule memory unit 132 and reads the set of candidate data from candidate data memory unit 133; applies the descriptors for each item of candidate data to each rule to calculate the positive-case resemblance score for each rule; and supplies the calculation results to candidate data selection unit 143.

Based on the positive-case resemblance score for each item of candidate data that has been found in prediction unit 142, candidate data selection unit 143 selects exactly a prescribed number M of items of data that are to be learned next and saves the selected candidate data in selection data memory unit 134. Methods that can be used for selecting M items include: a method of finding the sum or the average of scores of a plurality of rules for each item of candidate data and then selecting M items in order from items having the highest total score or average; and a method of using a prescribed function to select items as described in JP-A-2005-107743. Alternatively, other methods can be applied, such as a method of finding the dispersion of scores of the plurality of rules and then selecting data for which the prediction is split.

Data updating unit 144 reads data that are to be leaned next from selection data memory unit 134, supplies these data as output to input/output device 110, removes data for which values of a desired level have been received as input from input/output device 110 from candidate data memory unit 133 and adds these data to learning data memory unit 131. The output from input/output device 110 of data that are to be learned next may be the entire data structure shown in FIG. 2, or may be only identifiers 201. The input of label values from input/output device 110 may be all of the data for which label values have been received as input, or may be the combination of identifiers 201, label numbers, and label values. A label number is a number for specifying one label among a plurality of labels. In this case, data updating unit 144 searches selection data memory unit 134 for the data having the identifier 201 that has been received as input, sets the received value in the label of the designated label number to register in learning data memory unit 131, and further, searches for and removes the candidate data having the received identifier 201 from candidate data memory unit 133.

Control unit 150 implements the control of repetition of the active learning cycles in active learning unit 140 and executes the label conversion process of learning data. Control unit 150 includes learning settings acquisition unit 151, similarity information acquisition unit 152, and data label conversion unit 153.

Learning settings acquisition unit 151 acquires from the user by way of input/output device 110 learning conditions that include at least desired label information (labels to be learned and their values when positive cases), investigates the values of desired labels of learning data that are stored in learning data memory unit 131, and then shifts processing to similarity information acquisition unit 152 if the number of positive cases is less than a prescribed value (0 or a predetermined positive integer), and shifts processing to learning unit 141 of active learning unit 140 if the number of positive cases is equal to or greater than the prescribed value.

Similarity information acquisition unit 152 supplies the determination results of learning settings acquisition unit 151 to input/output device 110 as necessary, acquires from, for example, users by way of input/output device 110 the information of other labels that have a similarity relation with the desired labels of the learning data as similarity information, and supplies this similarity information to data label conversion unit 153. Each label of the learning data indicates a state relating to a certain aspect of the data. Accordingly, other labels that indicate the states of aspects that are similar to aspects indicated by desired labels have a similarity relation with the desired labels. For example, when the label of label number 1 indicates the existence or nonexistence of activity with a certain protein A, and the label of label number 2 indicates the existence or nonexistence of activity with another protein B that has a close relation with protein A, the two labels, label number 1 and label number 2, can be said to have a similarity relation. Typically, if one of two similar labels is a class, the other is also a class, and if one is a function value, the other is also a function value, and further, the meaning of numerical values is also the same.

Data label conversion unit 153 reads learning data from learning data memory unit 131, and rewrites the values of the desired labels in each item of learning data to the values of other labels having a similarity relation with the desired labels. For example, in FIG. 2, when the label of label number 1 is a desired label (learning label) and the similarity information "label number 1 and label number 2 have a similarity relation" is received as input, the label of label number 1 is rewritten to the value of the label of label number 2 and label number 1 and the original value of label 1 are recorded in restoration information 204. In addition, true positive cases may be excluded from objects of label conversion. In the preceding example, for example, because data for which label 1 is the desired value 1 are true positive cases, these data are not the targets of label conversion. When data label conversion unit 153 completes the label rewriting process, processing proceeds to learning unit 141 of active learning unit 140.

Explanation next regards the operation of the present embodiment.

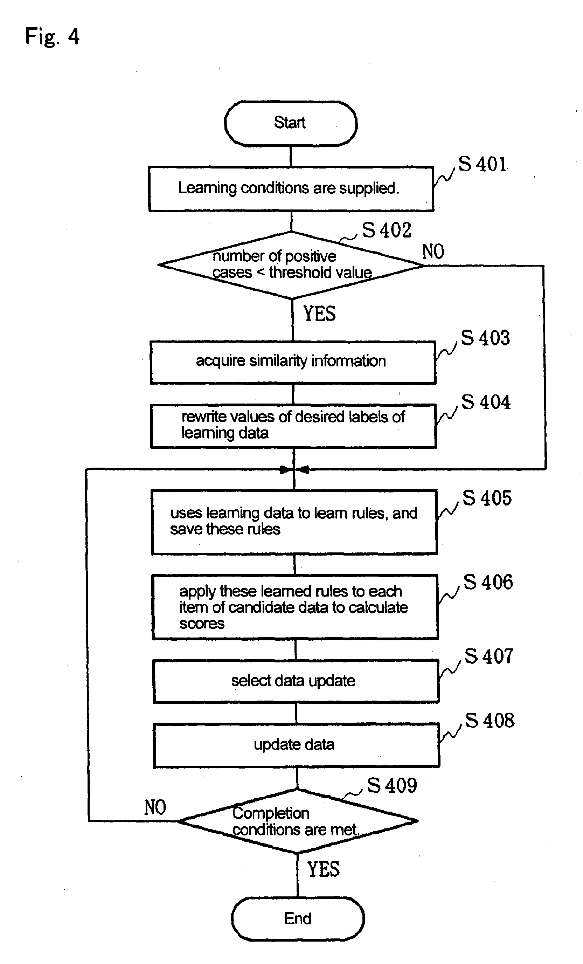

When active learning is started, a plurality of items of learning data are stored in learning data memory unit 131 of memory unit 130, and a plurality of items of candidate data are stored in candidate data memory unit 133. In addition, meaningful rules do not exist in rule memory unit 132, and not a single item of selected data is saved in selection data memory unit 134. When processing device 120 is activated in this state, the process shown in FIG. 4 is started.

First, learning conditions that are provided from input/output device 110 are supplied to learning settings acquisition unit 151 (Step S401 in FIG. 4). Learning settings acquisition unit 151 searches learning data memory unit 131 using as a key the information of the desired labels that is contained in the learning condition (for example, desired values and label numbers of desired labels), calculates the number of items of learning data for which the value of the desired label is the desired value, i.e., the number of positive cases, and compares this number with the predetermined threshold value (Step S402). If the number of positive cases is equal to or greater than the threshold value, the process moves to learning unit 141. On the other hand, if the number of positive cases is less than the threshold value, similarity information acquisition unit 152 acquires similarity information of the desired label from input/output device 110 for transfer to data label conversion unit 153 (Step S403). Based on the similarity information of the desired label, data label conversion unit 153 rewrites the values of desired labels of all learning data that are stored in learning data memory unit 131 to the values of the similar labels and records the information for restoration to restoration information 204 (Step S404). The process then moves to learning unit 141.

In the case of the present embodiment, processing after learning unit 141 is carried out as in an active learning system of the prior art. More specifically, learning unit 141 first uses the set of learning data that is stored in learning data memory unit 131 to learn the plurality of rules 301 by, for example, the bagging method, and saves these rules in rule memory unit 132 as shown in FIG. 3 (Step S405). Bagging is one ensemble learning method (a method of integrating a plurality of learning machines to carry out predictions), and is method in which each learning machine performs learning using differing data groups that are generated by sampling data from the same database of known cases to predict the classes of unknown cases by means of a majority decision of these predicted values. Prediction unit 142 next applies these learned rules to each item of candidate data in candidate data memory unit 133 to calculate positive-case resemblance scores (Step S406). Based on each of these scores that have been calculated for candidate data, candidate data selection unit 143 then selects M items of data that are to be learned next (Step S407). Data updating unit 144 then supplies these M items of data that have been selected as, for example, table format from input/output device 110; and then removes from the set of candidate data in candidate data memory unit 133 those data for which the actual values of desired labels have been received as input from input/output device 110 and adds these data to the set of learning data in learning data memory unit 131 (Step S408). One cycle of active learning being thus completed, the processing returns to control unit 150.

Control unit 150 determines whether the completion conditions have been met or not (Step S409), and if the completion conditions have not been satisfied, processing again proceeds to learning unit 141. The previously described processing is subsequently repeated. In this case, the learning data that existed at the start of learning is mixed with learning data that have been added by data updating unit 144 in learning data memory unit 131. The values of desired labels of the latter learning data are actual values that have been checked by experimentation or investigation. In contrast, the values of desired labels of the former learning data (learning data that existed at the start of learning) have been substituted by the values of other labels if data label conversion unit 153 is operating. In the case of the present embodiment, these learning data are used without being specially distinguished. On the other hand, if the completion conditions are satisfied, control unit 150 halts the repetition of the active learning cycles. The plurality of rules that are saved in rule memory unit 132 at this point in time are the final result rules. The completion conditions are provided from input/output device 110, and these conditions may be any conditions such as a maximum number of repetitions of the active learning cycles.

Explanation next regards the operation of the present embodiment using a specific example.

As an example of the search for active compounds in the field of pharmacological screening, we will take up the search for ligand compounds that act upon biogenic amine receptors among the G-protein coupled receptors (GPCRs) that are the chief targets of pharmacological research, and in particular, the search for ligand compounds that act upon adrenalin, which is one of the family of biogenic amine receptors.

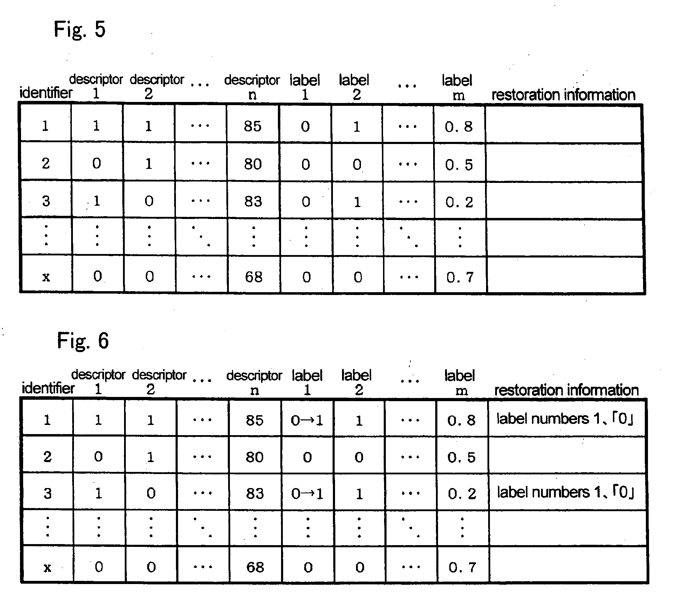

Referring to FIG. 5, x items of learning data (data on compounds) are stored in learning data memory unit 131. Each item of compound data is uniquely distinguished by an identifier, and structures are specified by descriptors 1-n. Labels 1-m indicate activity with respect to the compound, and in this case, label 1 indicates the existence or nonexistence of activity with respect to adrenalin, and label 2 indicates the existence or nonexistence of activity with respect to histamine. In either case, the label is set to the numerical value "1" when there is activity, and to numerical value "0" when there is no activity. In this case, it is assumed that compounds having activity to histamine, which is one of the biogenic amine receptor family, are registered in learning data memory unit 131, but not one compound having activity to adrenalin, which belongs to the same family, is registered in learning data memory unit 131. It is further assumed that a multiplicity of data of compounds for which the existence of activity to adrenalin is unclear are stored as candidate data in candidate data memory unit 133.

Control unit 150 of processing device 120 begins operation in this state, and upon receiving from input/output device 110 "label 1" as the desired label, i.e., a learning condition in which an item of data indicating the existence of activity to adrenalin is taken as a positive case, learning settings acquisition unit 151 searches learning data memory unit 131 to calculate the number of positive cases in which the value of label 1 is "1" and determines that the threshold value has not been reached. As a result, processing is next carried out for the input of similarity information by similarity information acquisition unit 152.

In the current case, the user applies as input from input/output device 110 similarity information indicating that label 1 and label 2 have a similarity. This similarity information results from the user's thinking that histamine belongs to the same GPCR biogenic amine receptor family as adrenalin, and that when proteins have a family relation, the ligand compounds are also frequently alike.

Data label conversion unit 153, in accordance with the similarity information that has been acquired by similarity information acquisition unit 152, searches for data in which the value of label 2 is "1," i.e., data of compounds that act upon histamine, from learning data memory unit 131, and replaces the values of label 1 of the data that have been searched with the values of label 2 as shown in FIG. 6. Learning is then executed by active learning unit 140 as described below with data in which the value of label 1 is "1" are taken as positive cases and data in which the value of label 1 is "0" are taken as negative cases.

Learning unit 141 first uses the data of compounds of learning data memory unit 131 to learn the positive/negative classification, and then saves the generated rules in rule memory unit 132. Prediction unit 142 next applies these rules relating to the data of compounds for which label 1 is unknown that are stored in candidate data memory unit 133 to calculate positive-case resemblance scores. Based on the calculated scores by prediction unit 142, candidate data selection unit 143 then selects from the set of candidate data the data of compounds that are to be the next candidates for experimentation and saves these data in selection data memory unit 134. Data updating unit 144 then supplies the data of compounds that are saved in selection data memory unit 134 as output to input/output device 110.

The user conducts actual assay experimentation relating to the data of compounds that have been supplied from input/output device 110 and investigates the existence of activity to adrenalin. These results indicate activity to adrenalin or inactivity to adrenalin, and based on these results, the user applies the values of label 1 for each of the items of data of the compounds that have been supplied as input from input/output device 110. Data updating unit 144 adds to learning data memory unit 131 the data in which the received label values have been set to label 1 of the data of each compound and deletes these data from candidate data memory unit 133.

In the second and subsequent active learning cycles, the same learning as described above is repeated using as positive cases, of the data of compounds that are stored in learning data memory unit 131, the data of compounds that have been determined to have activity to adrenalin through the above-described assay experimentation and the data of compounds for which labels have been converted by data label conversion unit 153 due to the existence of activity to histamine, and using as negative cases the other data of compounds.

In this way, when information on the ligands of target proteins is nonexistent or sparse, information on family proteins can be utilized to efficiently find desired ligand compounds, and moreover, to enable continued learning with the found ligand compounds as positive cases.

Explanation next regards the effect of the present embodiment.

According to the present embodiment, meaningful learning can be performed even when extremely few or no positive cases exist in the set of learning data in the initial state at the start of learning. The reason for this is as follows. In the present embodiment, when information of other labels similar to desired labels is received as similarity information, the values of the desired labels of learning data are replaced by the values of the other similar labels. As a result, the learning data following replacement are the same as positive cases if the values of the other similar labels are the same as desired values of the desired labels. The apparent number of positive cases thus increases greatly. The positive cases following replacement are provisional positive cases and not true positive cases for which desired labels are originally the desired values, but because these provisional positive cases have a similarity relation to true positive cases, the rules that are learned using the provisional positive cases are rules having some significance. As a result, data to be learned next that are selected from candidate data by applying these rules have a higher probability of being positive cases than data that are selected at random, and learning efficiency can be improved over random selection.

According to the present embodiment, moreover, learning settings acquisition unit 151 can exclude processing by similarity information acquisition unit 152 and data label conversion unit 153 if the number of positive cases exceeds the threshold value and thus start learning of only true positive cases as in the prior art. As a result, the initiation of learning by provisional positive cases despite the existence of an adequate number of true positive cases can be prevented.

In addition, during label conversion of learning data by data label conversion unit 153 according to the present embodiment, the original values and label numbers of the objects of label conversion are recorded in restoration information 204 of these data, whereby learning data in which labels have been converted according to necessity can be restored to their original state.

Explanation next regards a modification of the first embodiment.

In the example described above, similarity information acquisition unit 152 accepts only one other label that resembles a desired label, but in this modification, similarity information that includes two or more other similar labels is acquired by input/output device 110, and of the values of two or more other similar labels, data label conversion unit 153 sets the value that has the desired value in the value of the desired label in each item of learning data. For example, in FIG. 2, if label 1 is assumed to be the desired label, label 2 and label m are assumed to be labels that resemble label 1, and the desired value of label 1 is assumed to be "1," the value of label 2 is set in label 1 when label 1 of certain learning data is "0," label 2 is "1," and label m is "0." In contrast, if label 2 is "0" and label m is "1," the value of label m is set in label 1. By means of this process, a sufficient number of provisional positive cases can be ensured even when the number of provisional positive cases would be insufficient using only one similar label.

When a plurality of similar labels is designated, an order of use that accords with the degree of resemblance to the desired label may be designated in the similarity information, and data label conversion unit 153 may, with each instance of selecting one similar label that has the earliest order of use (highest degree of resemblance) to perform label conversion, calculate the number of positive cases in which the desired label is the desired value and then select the similar label that is next in order to perform label conversion if a prescribed number has not been reached.

## Second Embodiment

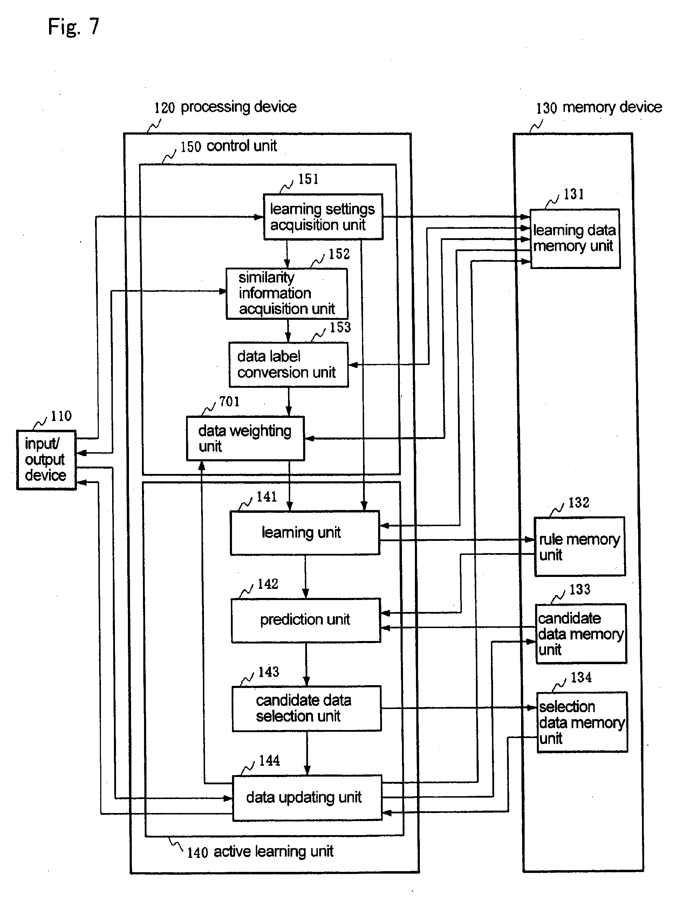

Referring now to FIG. 7, the active learning system according to the second embodiment of the present invention differs from the first embodiment shown in FIG. 1 in that control unit 150 is provided with data weighting unit 701.

When label conversion is being implemented for the learning data of learning data memory unit 131 by data label conversion unit 153, and when new learning data are being added to learning data memory unit 131 by data updating unit 144 of active learning unit 140, data weighting unit 701 sets a weight to each item of learning data of learning data memory unit 131 for performing learning that prioritizes true positive cases over provisional positive cases.

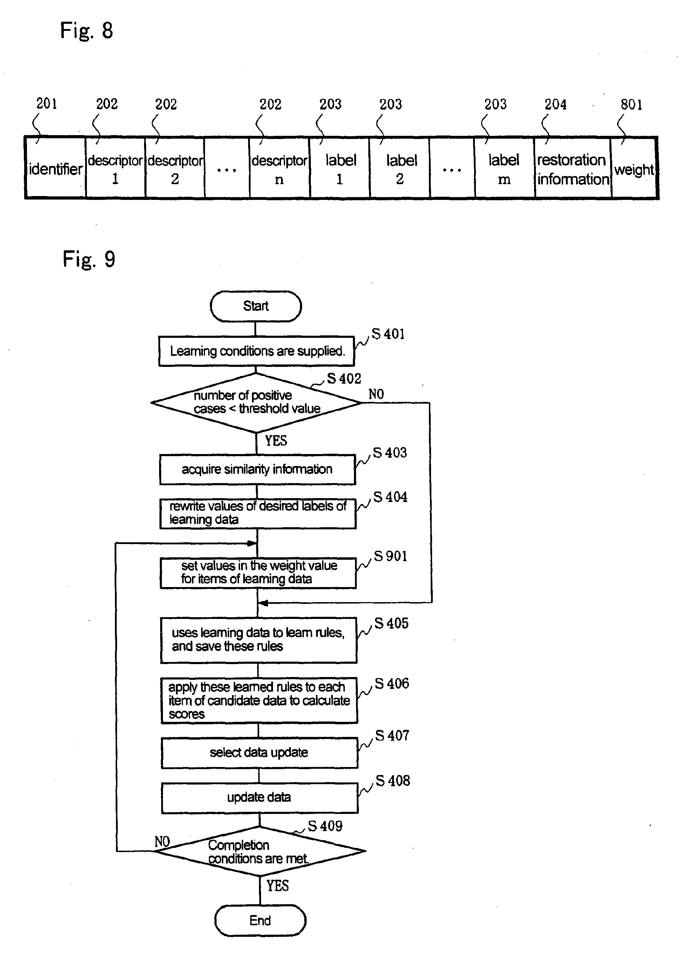

Referring to FIG. 8, each item of learning data that is stored in learning data memory unit 131 includes learning weight 801 in addition to identifier 201, a plurality of descriptors 202, a plurality of labels 203, and restoration information 204. Weight 801 assumes a value of, for example, from 0 to 1, values approaching 1 (higher values) indicating a greater degree of importance.

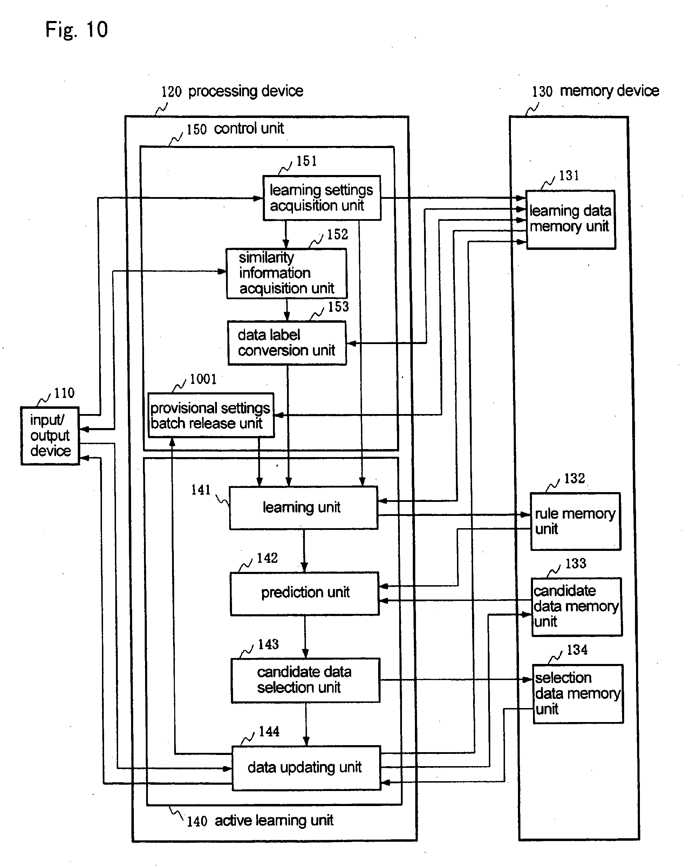

Referring to FIG. 9, the flow of operations of the active learning system according to the present embodiment differs from the first embodiment shown in FIG. 4 in that Step S901 is provided for setting the weights of learning data.

Explanation next regards the operation of the present embodiment.

The operations from the start up to Step S404 are the same as in the first embodiment. When label conversion is carried out by data label conversion unit 153, the process moves to data weighting unit 701. Data weighting unit 701 examines restoration information 204 of each item of learning data from learning data memory unit 131 to determine the existence or nonexistence of label conversion, sets small values in the weight value for positive cases of learning data for which there has been label conversion, and sets large values in the weight value for items of learning data for which there has been no label conversion (Step S901). The process then moves to active learning unit 140.

In the process that follows learning unit 141, learning proceeds by conferring differences to degree of importance by means of the value of learning weights 801. In other words, learning proceeds while giving priority to learning data having a large weight 801 over learning data having a smaller weight. More specifically, in the bagging method, data that are sampled from the set of learning data are given to a plurality of learning algorithms (learning mechanisms) to generate a plurality of rules, and as a result, data within the set of learning data are sampled while performing weighting in accordance with weights 801 that have been conferred to learning data. The method of varying the degree of importance of learning in accordance with weights that are given to learning data is not limited to the example described above, and various other methods may be adopted.

Upon completion of one cycle of active learning in active learning unit 140, the process again moves to data weighting unit 701. Data weighting unit 701 sets learning weights 801 for learning data that have been newly added to learning data memory unit 131 according to true positive cases or negative cases.

The operation is otherwise the same as in the first embodiment.

According to the present embodiment, learning is enabled that places greater importance on true positive cases over provisional positive cases from the start and until the end of learning. Accordingly, when true positive cases are few in number but exist at the start of learning, learning is implemented from the first round that places greater importance on true positive cases over the provisional positive cases that are generated by label conversion.

Explanation next regards a modification of the second embodiment.

In the previously described example, similarity information acquisition unit 152 accepts only one other label that resembles a desired label as in the first embodiment, but in this modification, similarity information acquisition unit 152 may accept similarity information that includes two or more other similar labels as in the modification of the first embodiment; and data label conversion unit 153 may set, in the values of desired labels, values that have the desired values among the values of two or more other similar labels in each individual item of learning data. Further, when a plurality of similar labels has been designated, an order of use that accords with the degree of similarity to the desired label may be designated in the similarity information, and data label conversion unit 153 may, with each instance of selection of one similar label having the earliest order of use (highest degree of similarity) for label conversion, calculate the number of positive cases for which the desired label is the desired value, and then select the similar label that is next in order for label conversion if a prescribed number has not been reached.

Still further, data weighting unit 701 may confer differences of learning weights 801 between provisional positive cases according to the degree of similarity. For example, in FIG. 8, if it is assumed that label 1 is the desired label, label 2 and label m are labels that are similar to label 1, the degree of similarity between label 1 and label 2 is 0.8, and the degree of similarity between label 1 and label m is 0.4, then weight 801 when label 1 is replaced by the value of label m is set to, for example, half of weight 801 when label 1 is replaced by the value of label 2. In this way, from the initiation of learning until the end of learning, learning is enabled that gives greater importance to true positive cases than to provisional positive cases, and moreover, that gives greater importance to provisional positive cases having a higher degree of similarity than to other provisional positive cases.

**Third Embodiment**

Referring to FIG. 10, the active learning system according to the third embodiment of the present invention differs from the first embodiment shown in FIG. 1 in that control unit 150 includes provisional settings batch release unit 1001.

Provisional settings batch release unit 1001 carries out processing to determine whether predetermined provisional settings batch release conditions are satisfied upon the conclusion of each active learning cycle by active learning unit 140, and when the provisional settings batch release conditions have been met, to return all provisional positive cases that are stored in learning data memory unit 131 to their state before label conversion by data label conversion unit 153.

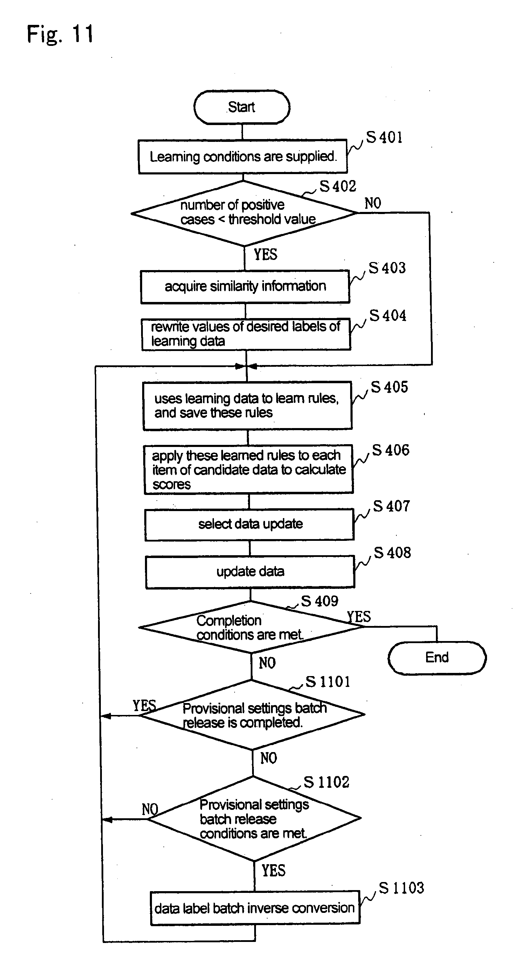

Referring to FIG. 11, the flow of operations of the active learning system according to the present embodiment compared with that of the first embodiment shown in FIG. 4 differs in that Steps S1101 to S1103 have been added.

Explanation next regards the operation of the present embodiment.

The operation in active learning unit 140 until completion of active learning of the initial cycle (Steps S401-408) is the same as that of the first embodiment. When the addition of new learning data to learning data memory unit 131 by data updating unit 144 is carried out and the process returns to control unit 150, it is determined whether the completion conditions have been met as in the first embodiment (Step S 409), and if the conditions have not been met, the process moves to provisional settings batch release unit 1001.

If provisional settings batch release is not completed (NO in Step S1101), provisional settings batch release unit 1001 determines whether the provisional settings batch release conditions have been met (Step S1102). The provisional settings batch release conditions have been set in the system in advance. For example, the event that the number of true positive cases that exist in learning data memory unit 131 has reached or surpassed a preset threshold value can be set as the provisional settings batch release condition. In this case, provisional settings batch release unit 1001 counts, of the data that are stored in learning data memory unit 131, the number of items of data for which the desired label is the desired value, and moreover, for which the restoration information is NULL, and compares this number with the threshold value. Other conditions can be taken as provisional settings batch release conditions, such as the event that the proportion of positive cases that occupies all data that have been added to learning data memory unit 131 by data updating unit 144 has reached or surpassed a prescribed value.

When the provisional settings batch release conditions have been satisfied (YES in Step S1102), provisional settings batch release unit 1001 examines restoration information 204 of each item of data that is stored in learning data memory unit 131, and if label numbers that were the objects of label conversion and original values are recorded, provisional settings batch release unit 1001 writes the original values over the values of the labels of the label numbers of these data to restore the state that preceded data label conversion (Step S1103). The process then moves to learning unit 141 of active learning unit 140, and the next active learning cycle begins. Thus, learning is carried out in subsequent active learning cycles using true positive cases and negative cases that are stored in learning data memory unit 131.

The operation is otherwise the same as in the first embodiment.

The operation of the present embodiment is next explained by taking up a specific example similar to the example used in the first embodiment, i.e., as an example of the search for active compounds in the field of pharmacological screening, the search for ligand compounds that act upon biogenic amine receptors among the G-protein coupled receptors (GPCRs) that are frequently the targets of pharmacological research, and in particular, ligand compounds that act upon adrenalin, which one of the biogenic amine receptor families. The operations up until the completion of active learning of the initial cycle in active learning unit 140 (Steps S401-S408) are the same as the specific example of the first embodiment.

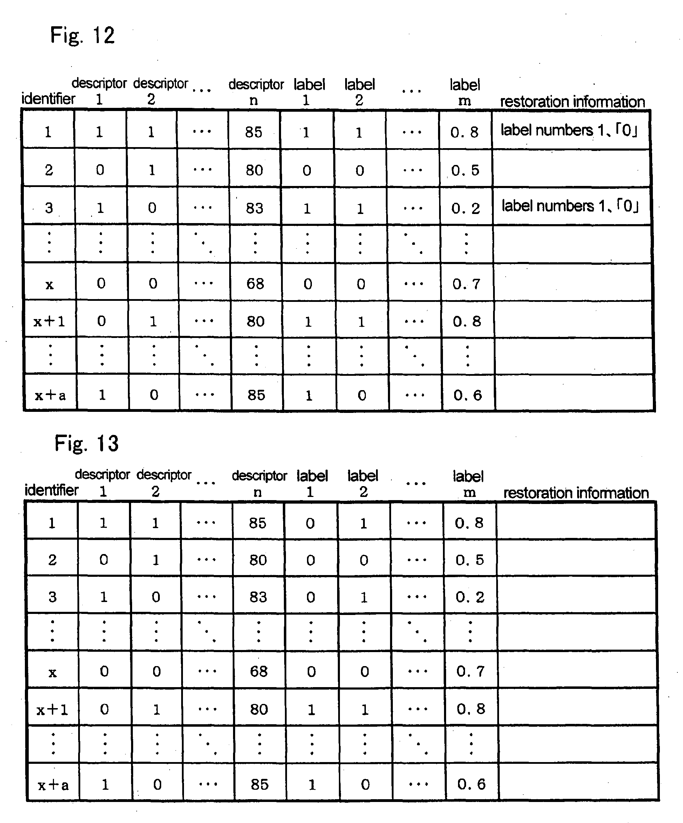

When the new learning data is added to learning data memory unit 131 by data updating unit 144 and the process returns to control unit 150, it is next determined whether the completion conditions have been satisfied, as in the first embodiment, and if the conditions have not been met, the process moves to provisional settings batch release unit 1001. It will be assumed that at this point in time, a number "a" of true positive cases and negative cases having identifiers from x+1 to x+a have been added to learning data memory unit 131, as shown in FIG. 12.

Provisional settings batch release unit 1001 examines the number of true positive cases that exist in learning data memory unit 131, compares this number with the threshold value, and determines whether the provisional settings batch release conditions have been met. If the provisional settings batch release conditions have been met, the provisional positive cases that are stored in learning data memory unit 131 are retuned to the state that preceded label conversion. In FIG. 12, the data of identifier 1 and identifier 3 are provisional positive cases, and the values of label 1 of these data are returned to the original values. As a result, the content of learning data memory unit 131 is as shown in FIG. 13, and the provisional positive cases all become negative cases, and the learning data becomes only true positive cases and negative cases. Thus, of the data of compounds that are stored in learning data memory unit 131, only data of compounds that have been determined to be active with respect to adrenalin through the above-described assay experimentation are used as positive cases and the data of other compounds are all used as negative cases in subsequent active learning cycles, and the same learning as described above is repeated.

Thus, when there is little or no information on ligands of the target protein, information regarding family proteins can be utilized to efficiently discover desired ligand compounds, and further, after the provisional settings batch release conditions have been met, learning can be continued with only the ligand compounds that have been discovered as positive cases.

Explanation next regards the effects of the present embodiment.

The present embodiment can obtain an effect similar to the first embodiment by which meaningful learning can be carried out even when extremely few or no positive cases exist in the set of learning data in the initial state at the starting time of learning, and further, when active learning cycles are repeated, true positive cases are acquired, and the provisional settings batch release conditions are met, can transition from learning that used provisional positive cases to learning that uses only true positive cases by means of batch reverse inversion process of data labels relating to positive cases. The present embodiment therefore enables learning that is more accurate than learning that continues to use provisional positive cases.

Explanation next regards a modification of the third embodiment.

In the example described above, provisional settings batch release unit 1001 converts the labels of provisional positive cases that are stored in learning data memory unit 131 to the original labels and thus eliminated the influence upon learning due to provisional positive cases, but the influence upon learning due to provisional positive cases can also be eliminated by using the weighting of learning that was described in the second embodiment. In other words, the weighting of learning of provisional positive cases is set to "0." According to this modification, however, provisional positive cases cannot be made true negative cases. In other words, the "0" (zero) weighting of data means that data do not exist and does not indicate true negative data.

**Fourth Embodiment**

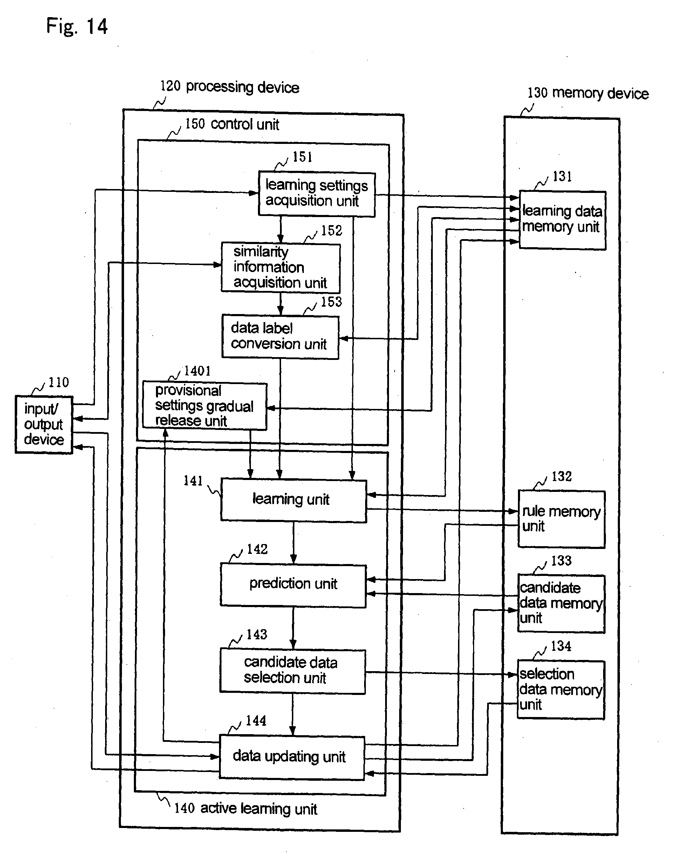

Referring to FIG. 14, the active learning system according to the fourth embodiment of the present invention differs from the third embodiment shown in FIG. 10 in that control unit 150 includes provisional settings gradual release unit 1401 in place of provisional settings batch release unit 1001.

Upon the completion of each cycle of active learning by active learning unit 140, provisional settings gradual release unit 1401 determines whether predetermined provisional settings gradual release conditions are satisfied, and if the provisional settings gradual release conditions have been met, carries out processing to return a portion of the provisional positive cases that are stored in learning data memory unit 131 to the state that preceded label conversion by data label conversion unit 153.

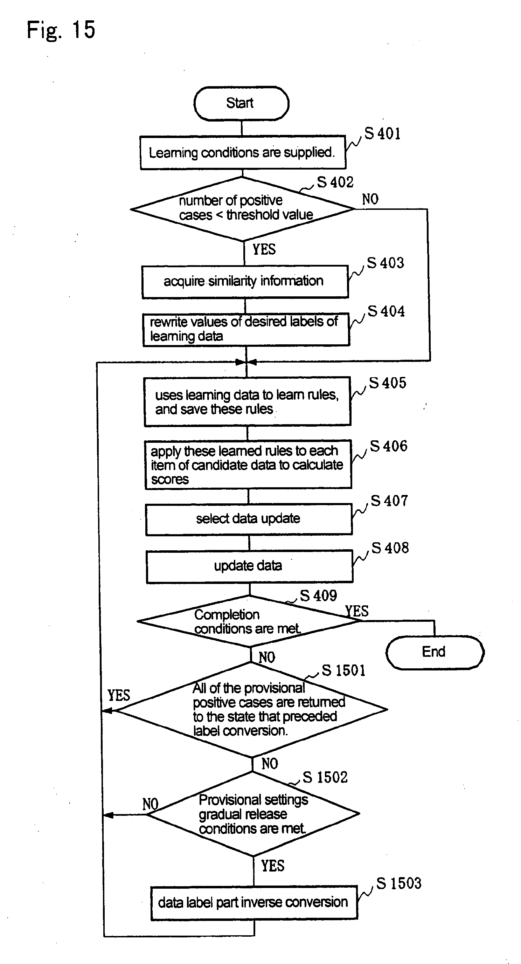

Referring to FIG. 15, the flow of operations of the active learning system according to the present embodiment differs from that of the third embodiment shown in FIG. 11 regarding the processes of Step S1501-1503.

Explanation next regards the operation of the present embodiment.

The operations up to the completion of active learning of the initial cycle in active learning unit 140 (Step S401-408) are the same as in the third embodiment. When new learning data are added to learning data memory unit 131 by data updating unit 144 and the process returns to control unit 150, it is next determined whether the completion conditions have been met as in the third embodiment (Step S409), and if the conditions have not been met, the process moves to provisional settings gradual release unit 1401.

If all of the provisional positive cases of learning data memory unit 131 have not been returned to the state that preceded label conversion (NO in Step S1501), provisional settings gradual release unit 1401 determines whether the provisional settings gradual release conditions have been met (Step S1502). The provisional settings gradual release conditions have been set in the system in advance. For example, the provisional settings gradual release condition can be set to the event in which the number of true positive cases that exist in learning data memory unit 131 equals or surpasses a threshold value that is given by Equation (1) shown below. Here, $\alpha$ is a predetermined positive integer.

$$\text{Threshold value} = \alpha \times [\text{number of active learning cycles executed so far}] \quad (1)$$

In the case of the provisional settings gradual release condition of this example, provisional settings gradual release unit 1401 counts, of the data stored in learning data memory unit 131, the number of items of data for which the desired label is the desired value, and moreover, for which the restoration information is NULL, and compares this counted value with the threshold value that was calculated in Equation (1). In addition, the provisional settings gradual release condition is not limited to the example shown above.

When the provisional settings gradual release conditions have been met (YES in Step S1502), provisional settings gradual release unit 1401 examines restoration information 204 of each item of data that is stored in learning data memory unit 131, and, for a predetermined number of data items of the data for which restoration information 204 is not NULL, rewrites the values of desired labels of these data to the original values to restore to the state that preceded the conversion of data labels (Step S1503). The process then moves to learning unit 141 of active learning unit 140, and the next active learning cycle begins. When an active learning cycle ends, the above-described determination and processing by provisional settings gradual release unit 1401 is again carried out, whereby, as the active learning cycles proceed and the number of true positive cases gradually increases, the number of provisional positive cases stored in learning data memory unit 131 gradually decreases until finally, learning is carried out using true positive case and negative cases.

The operations are otherwise the same as in the third embodiment.

Explanation next regards the effects of the present embodiment.

According to the present embodiment, the same effect as the first embodiment can be obtained, i.e., meaningful learning can be realized even when extremely few or no positive cases exist within the set of learning data in the initial state at the beginning of learning. Further, according to the present embodiment, as active learning cycles are repeated and true positive cases are gradually acquired, the number of provisional positive cases gradually decreases, whereby, relating to positive cases, learning that uses provisional positive cases can be shifted by degrees to learning that uses only true positive cases.

Explanation next regards a modification of the fourth embodiment.

In the previously described example, provisional settings gradual release unit 1401 converts labels of provisional positive cases that are a portion of the data stored in learning data memory unit 131 to the original labels and thus gradually eliminates the effect upon learning that is due to provisional positive cases, but the learning weighting described in the second embodiment can also be used to gradually eliminate the effect upon learning caused by provisional positive cases. In other words, each time the provisional settings gradual release conditions are met, the learning weighting of a portion of the provisional positive cases is set to "0" or the learning weighting of all provisional positive cases is decreased by a prescribed value. However, because provisional positive cases cannot be made true negative cases according to this modification, the labels of all provisional positive cases are preferably restored to the state that preceded label conversion when the learning weighting for all provisional positive cases becomes "0." A further modification can be considered in which, by combining the above modification and the fourth embodiment, each time the provisional settings gradual release conditions are met, the labels of a portion of the provisional positive cases are restored to their state before label conversion, and at the same time, the learning weighting of the remaining provisional positive cases is decreased by a prescribed amount.

## Fifth Embodiment

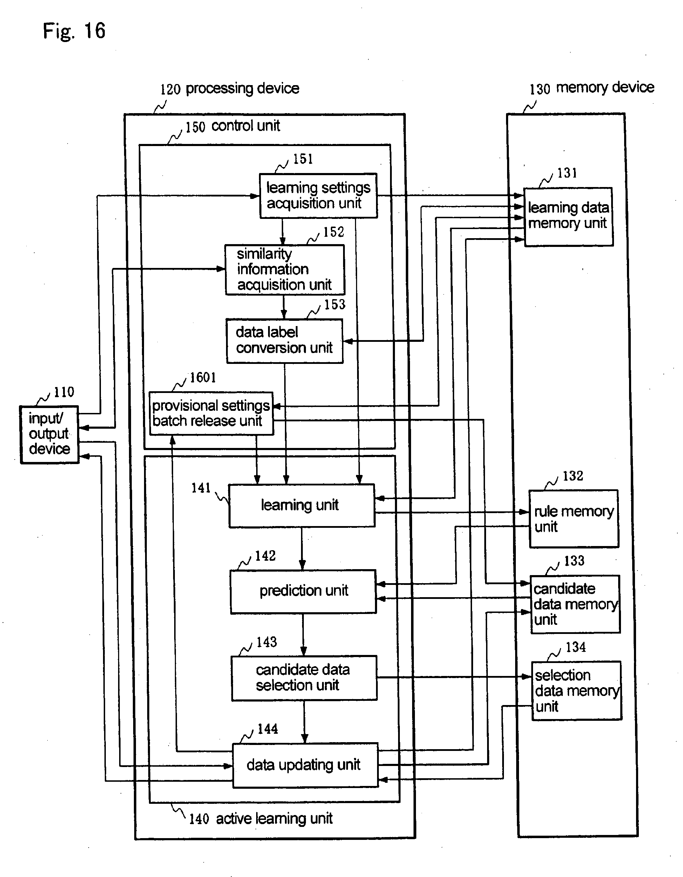

Referring to FIG. 16, the active learning system according to the fifth embodiment of the present invention differs from the third embodiment shown in FIG. 10 in that the values of the desired labels of provisional positive cases are unknown, and control unit 150 includes provisional settings batch release unit 1601 in place of provisional settings batch release unit 1001.

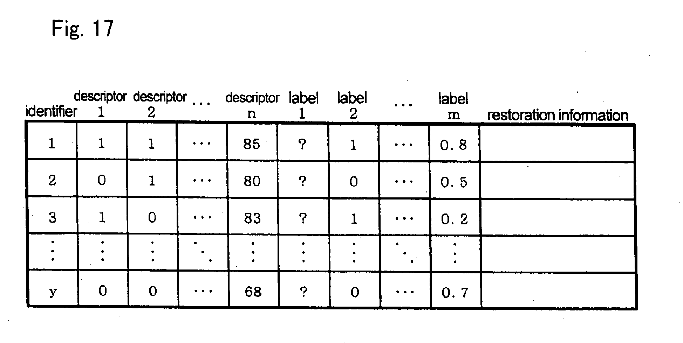

Referring to FIG. 17, a number y of items of data on compounds similar to FIG. 5 are stored in learning data memory unit 131. Each item of data is uniquely distinguished by an identifier, and further, the structure is specified by descriptors 1-n. Labels 1-m each indicate activity of the compound, label 1 in this case indicating the existence or nonexistence of activity with respect to adrenalin, and label 2 indicating the existence or nonexistence of activity with respect to histamine. In either case, the label is set to numerical value "1" when activity exists, set to numerical value "0" when there is no activity, and set to NULL when unknown (represented by "?" in FIG. 17). In this example, a case is assumed in which compounds that have or lack activity with histamine, which is one of the family of biogenic amine receptors, are registered in learning data memory unit 131, but it is not known if these compounds have or lack activity to adrenalin, which belongs to the same family. In addition, a multiplicity of data on compounds for which the existence or nonexistence of activity with adrenalin is unclear are stored as candidate data in candidate data memory unit 133.

Upon the completion of each active learning cycle by active learning unit 140, provisional settings batch release unit 1601 determines whether predetermined provisional settings batch release conditions have been met, and if the provisional settings batch release conditions have been met, provisional settings batch release unit 1601 performs processing to restore all provisional positive cases that are stored in learning data memory unit 131 to the state that preceded label conversion by data label conversion unit 153. This process is the same as the process of provisional settings batch release unit 1001 in the third embodiment, but provisional settings batch release unit 1601 further examines the values of desired labels of the learning data that have been restored to the state before label conversion, and if the value is NULL, adds these learning data to candidate data memory unit 133 and deletes the data from learning data memory unit 131. If the value is not NULL, provisional settings batch release unit 1601 leaves the data unchanged in learning data memory unit 131 and uses the data in learning as a positive case or a negative case.

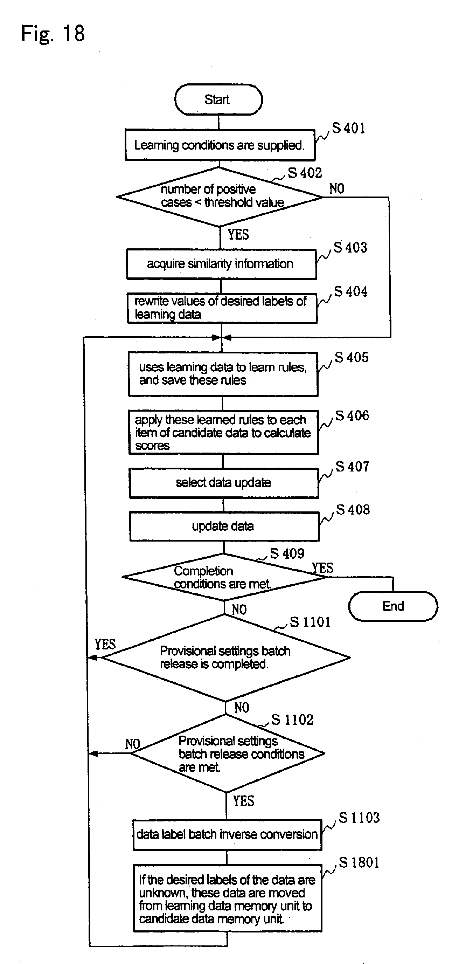

Referring to FIG. 18, the flow of operations of the active learning system according to the present embodiment differs from that of the third embodiment shown in FIG. 11 in that Step S1801 has been added.

Explanation next regards the operation of the present embodiment.

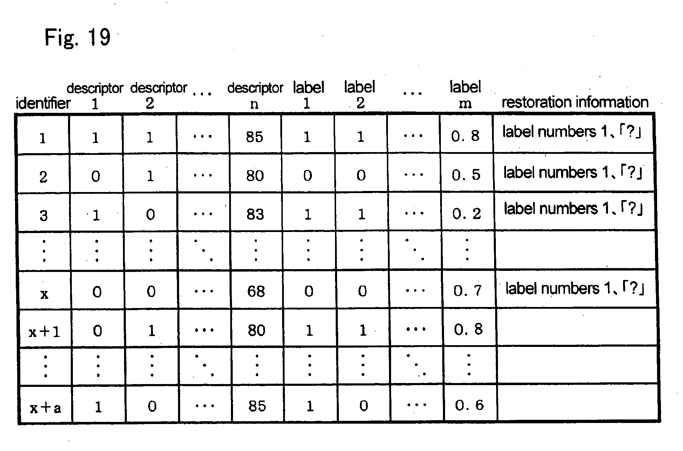

The operations up to the completion of the active learning in the initial cycle in active learning unit 140 (Steps S401 to S408) are the same as in the third embodiment. In the case of the present embodiment, however, the values of desired labels of the learning data are unknown, and data label conversion unit 153 therefore sets the values of similar labels to the values of desired labels regardless of whether the values of similar labels are desired values or not and thus generates not only provisional positive cases but provisional negative cases as well. In FIG. 17, for example, assuming that label 2 is a label that resembles label 1, which is the desired label, "1" is set in label 1 of the learning data of identifier 1 to produce a provisional positive case, and "0" is set in label 1 of the learning data of identifier 2 to produce a provisional negative case. When new learning data are subsequently added to learning data memory unit 131 by data updating unit 144 and the process returns to control unit 150, it is first determined whether the completion conditions have been met as in the third embodiment, and if the completion conditions have not been met, the process moves to provisional settings batch release unit 1601. FIG. 19 shows an example of the content of learning data memory unit 131 at this time. As in FIG. 12, "a" items of new learning data have been added.

If provisional settings batch release is not completed (NO in Step S1101), provisional settings batch release unit 1601 determines whether provisional settings batch release conditions have been met (Step S1102), and if provisional settings batch release conditions have been met (YES in Step S1102), provisional settings batch release unit 1601 examines restoration information 204 of each item of data that is stored in learning data memory unit 131, and if the label numbers and original values of the object of label conversion are recorded, provisional settings batch release unit 1601 rewrites the values of the labels of the label numbers of these items of data to the original values that have recorded and thus restores the state that preceded data label conversion (Step S1103). If the desired labels of the data that have been restored to the state that preceded data label conversion are unknown, these data are moved from learning data memory unit 131 to candidate data memory unit 133 (Step S1801). In the case of FIG. 19, the data of identifiers 1, 2, 3, and x are accordingly moved to candidate data memory unit 133. The process then moves to learning unit 141 of active learning unit 140, and the next active learning cycle is started. In this way, learning is carried out using true positive cases and negative cases that are stored in learning data memory unit 131 in subsequent active learning cycles. In addition, data that have been moved from learning data memory unit 131 to candidate data memory unit 133 are treated as candidate data of data that are to be learned next.

The operations are otherwise the same as in the third embodiment.

According to the present embodiment, the same effects can be obtained as in the third embodiment, i.e., meaningful learning can be realized even when exceedingly few or no positive cases exist in the set of learning data in the initial state at the start of learning; and further, as active learning cycles are repeated and true positive case are obtained, a batch inversion transform process of data labels relating to positive cases can be performed when provisional settings batch release conditions are met to enable the movement from learning that uses provisional positive cases to learning that uses only true positive cases. Further, provisional positive case in which the values of desired labels were unknown can be treated as candidate data to increase the number of candidate data items.

**Sixth Embodiment**

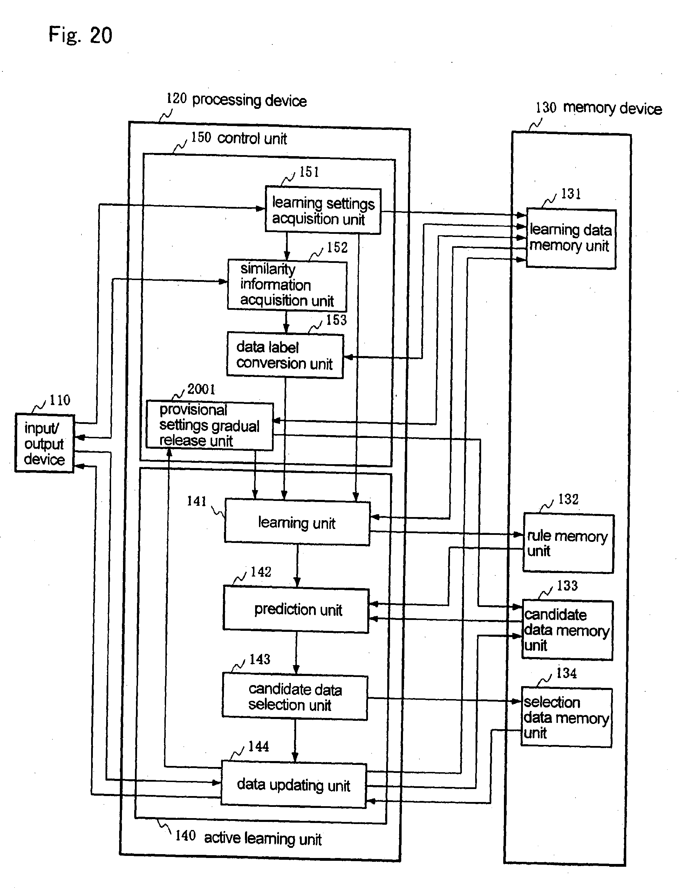

Referring to FIG. 20, the active learning system according to the sixth embodiment of the present invention differs from the fourth embodiment shown in FIG. 14 in that the values of desired labels of provisional positive cases are unknown, and control unit 150 includes provisional settings gradual release unit 2001 in place of provisional settings gradual release unit 1401.

With each completion of an active learning cycle by active learning unit 140, provisional settings gradual release unit 2001 determines whether predetermined provisional settings gradual release conditions have been met, and if the provisional settings gradual release conditions have been met; provisional settings gradual release unit 2001 performs a process for restoring a portion of the provisional positive cases that are stored in learning data memory unit 131 to the state preceding label conversion by data label conversion unit 153. This process is the same as the process of provisional settings gradual release unit 1401 in the fourth embodiment, but provisional settings gradual release unit 2001 further examines the values of desired labels of learning data that have been restored to the state preceding label conversion, and if these values are unknown (NULL), adds these learning data to candidate data memory unit 133 and deletes them from learning data memory unit 131. If the values are not NULL, provisional settings gradual release unit 2001 leaves these learning data unchanged in learning data memory unit 131 and uses these data in learning as positive cases or negative cases. Apart from the operation of this provisional settings gradual release unit 2001, the operations of the present embodiment are the same as the fourth embodiment.

According to the present embodiment, the same effects can be obtained as in the fourth embodiment, i.e., meaningful learning can be realized even when exceedingly few or no positive cases exist in the set of learning data in the initial state at the start of learning, and further, as active learning cycles are repeated and true positive cases are gradually obtained, the number of provisional positive case gradually decreases, whereby, relating to positive cases, learning that uses provisional positive cases can shift by degrees to learning that uses only true positive cases. Still further, provisional positive cases for which the values of desired labels were unknown can be treated as candidate data, whereby the number of items of candidate data can be increased.

**Seventh Embodiment**

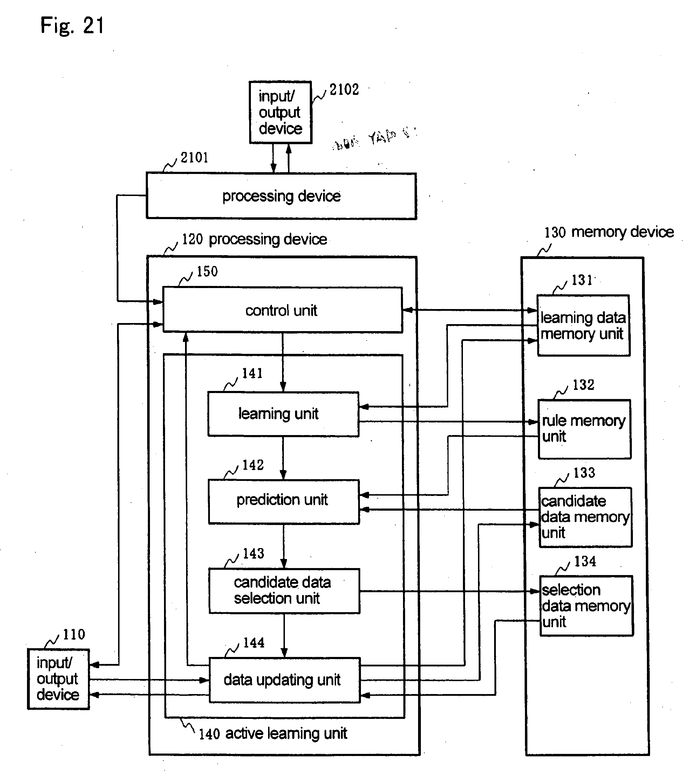

Referring to FIG. 21, the seventh embodiment of the present invention differs from the first to sixth embodiments in that another processing device 2101 that is independent of processing device 120 and input/output device 2102 that is connected to processing device 2102 are provided.

Processing device 2101 is provided with the functions of learning settings acquisition unit 151, similarity information acquisition unit 152, and data label conversion unit 153 of FIG. 1; and in accordance with instructions from input/output device 2102 constituted by, for example, a keyboard or LCD, generates, as learning data, learning data for which the label conversion process has been completed, i.e., data in which the values of desired labels of data that are composed of a plurality of descriptors and a plurality of labels are rewritten to the values of other labels that indicate the states of aspects that resemble the aspects indicated by these desired labels; and transmits these learning data to processing device 120 by a communication path between processing devices. Processing device 120 has the same configuration as in the first to sixth embodiments, but upon receiving the learning data from processing device 2101, stores these learning data in learning data memory unit 131 of memory device 130 and omits the processes realized by learning settings acquisition unit 151, similarity information acquisition unit 152, and data label conversion unit 153.

According to the present invention, an outside processing device carries out a process for generating, as learning data, data in which the values of desired labels of data that are composed of a plurality of descriptors and a plurality of labels have been rewritten to the values of other labels that indicate the states of aspects that resemble the aspects that are indicated by the desired labels, and as a result, the load upon processing device 120 that includes active learning unit 140 can be reduced.

In the above description of operations, the learning data that were generated by processing device 2101 were transferred to a processing device by way of a communication path, but the learning data may also be written from processing device 2101 to a transportable storage device which is then conveyed to the installed location of processing device 120 and then set in processing device 120 to be read to memory device 130, or this storage device itself may be used as learning data memory unit 131.

**Other Embodiments of the Present Invention**

Although various embodiments of the present invention have been set forth above, the present invention is not limited to the above-described examples and is open to various other additions and modification. In addition, the functions possessed by the active learning system of the present invention may of course be realized by hardware, and can further be realized by a computer and an active learning program. An active learning program may be offered recorded on a recording medium such as a magnetic disk or semiconductor memory that is readable by a computer. Upon start-up of the computer, the program is read by the computer, and by controlling the operation of the computer, causes the computer to function as each of the functional means in the control unit and active learning unit in each of the embodiments described above.

**Potential for Use in Industry**

The active learning system and method of the present invention can be applied to data mining as in the selection of data desired by a user from a multiplicity of items of candidate data, such as in the search for active compounds in the field of pharmacological screening.

While a preferred embodiment of the present invention has been described using specific terms, such description is for illustrative purposes only, and it is to be understood that changes and variations may be made without departing from the spirit or scope of the following claims.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

A learning data memory unit stores a set of learning data that are composed of a plurality of descriptors and a plurality of labels. When positive cases, in which the values of desired labels are desired values, are few in number or nonexistent in the learning data memory unit, a control unit rewrites the values of desired labels to values of other similar labels to generate provisional positive cases. An active learning unit uses the provisional positive cases and negative cases to learn rules, applies these learned rules to a set of candidate data that are stored in a candidate data memory unit in which desired labels are unknown to predict the resemblance of each item of candidate data to positive cases, and based on these prediction results, selects and supplies data that are to be learned next from an input/output device. The active learning unit subsequently, regarding data for which the actual values of the desired labels have been received as input from the input/output device, removes these data from the set of candidate data and adds these data to the set of learning data.

## Claims

**1.** An active learning system comprising:

a control unit for treating as learning data data in which values of desired labels of data that are composed of a plurality of descriptors and a plurality of labels have been rewritten to values of other labels that indicate states of aspects that resemble aspects indicated by the desired labels and for generating a set of said learning data in a learning data memory unit;

a candidate data memory unit for taking data for which said desired labels are unknown as candidate data and for storing a set of said candidate data; and

an active learning unit that includes:

a learning unit for, when data in which said desired labels are desired values are taken as positive cases and other data are taken as negative cases, using data of positive cases and negative cases that are stored in said learning data memory unit to learn rules for, in response to an input of descriptors of any data, calculating a resemblance of these data to positive cases;

a prediction unit for applying rules that have been learned to a set of candidate data that are stored in said candidate data memory unit to predict the resemblance to positive cases of each item of candidate data;

a candidate data selection unit for selecting data that are to be learned next based on prediction results; and

a data update unit for supplying selected data from an output device, and for data in which an actual value of said desired label has been received as input from an input device, removing said data from the set of candidate data and adding to the set of learning data;

wherein a repetition of active learning cycles is controlled by said control unit.

**2.** An active learning system according to claim 1, wherein said control unit includes:

a learning settings acquisition unit for, based on information of said desired labels that has been received as input from said input device, examining a number of positive cases that are included in the set of learning data that have been stored beforehand in said learning data memory unit;

a similarity information acquisition unit for receiving as input from said input device similarity information relating to other labels that resemble said desired labels when the number of positive cases that have been examined is less than a threshold value; and

a data label conversion unit for rewriting values of said desired labels of learning data that are stored in said learning data memory unit to the values of other labels that are indicated by said similarity information.

**3.** An active learning system according to claim 1, wherein said control unit receives from an outside device learning data in which the values of said desired labels have been rewritten to the values of other labels and saves the received data in said learning data memory unit.

**4.** An active learning system according to claim 1, 2, or 3, wherein said control unit includes a data weighting unit for setting weights to said learning data whereby learning is carried out in said active learning unit that gives more importance to true positive cases in which said desired labels are actually desired values than to provisional positive cases in which said desired labels have become desired values as a result of rewriting with the values of other labels.

**5.** An active learning system according to claim 1, 2, or 3, wherein said control unit includes a provisional settings batch release unit for determining whether predetermined provisional settings release conditions have been met or not during active learning by means of said active learning unit, and when said provisional settings batch release conditions have been met, performing a process to eliminate an influence upon learning caused by treating, of learning data that have been stored in said learning data memory unit, all learning data in which the values of said desired labels have been rewritten to the values of other labels as positive cases.

**6.** An active learning system according to claim 5, wherein said provisional settings batch release unit restores all learning data for which the values of said desired labels have been rewritten to the values of other labels to a state that preceded rewriting.

**7.** An active learning system according to claim 5, wherein said provisional settings batch release unit, when said desired labels of learning data that have been restored to the state before rewriting are unknown, moves these learning data from said learning data memory unit to said candidate data memory unit.

**8.** An active learning system according to claim 1, 2, or 3, wherein said control unit includes a provisional settings gradual release unit for, upon each completion of an active learning cycle by means of said active learning unit, determining whether provisional settings gradual release conditions that have been determined in advance have been met or not, and if said provisional settings gradual release conditions have been met, performing a process to gradually weaken an influence upon learning caused by treating as positive cases, of learning data that are stored in said learning data memory unit, learning data in which the values of said desired labels have been rewritten to values of other labels.

**9.** An active learning system according to claim 8, wherein said provisional settings gradual release unit restores a portion of learning data, in which the values of said desired labels have been rewritten to values of other labels, to a state preceding rewriting.

**10.** An active learning system according to claim 8, wherein said provisional settings gradual release unit, when said desired labels of learning data that have been restored to a state before rewriting are unknown, moves these learning data from said learning data memory unit to said candidate data memory unit.

**11.** An active learning system according to claim 8, wherein said provisional settings gradual release unit adjusts weights of learning of learning data in which the values of said desired labels have been rewritten to the values of other labels.

**12.** An active learning method, comprising the steps wherein:

a) a control unit treats as learning data data in which values of desired labels of data composed of a plurality of descriptors and a plurality of labels have been rewritten to values of other labels that indicate states of aspects that resemble aspects indicated by the desired labels and generates a set of said learning data in a learning data memory unit;
b) an active learning unit, when data in which said desired labels are desired values are taken as positive case and other data are taken as negative cases, uses data of positive cases and negative cases that are stored in said learning data memory unit to learn rules for, and, in response to an input of descriptors of any data, calculates a resemblance of these data to positive cases;
c) said active learning unit applies said rules that have been learned to a set of candidate data that are stored in a candidate data memory unit for storing a set of said candidate data, said candidate data being data for which said desired labels are unknown, to predict the resemblance of each item of candidate data to positive cases;
d) said active learning unit selects data that are to be learned next based on prediction results;
e) said active learning unit supplies selected data as output from an output device, and regarding data in which actual values of said desired labels have been received as input from an input device, removes these data from the set of candidate data and adds these data to the set of learning data; and
f) said control unit, based on completion conditions, controls a repetition of active learning cycles by said active learning unit.

**13.** An active learning method according to claim 12, wherein, in said step "a," said control unit: based on information of said desired labels that has been received as input from said input device, examines a number of positive cases that are contained in the set of learning data that have been stored beforehand in said learning data memory unit;

when the number of positive cases that have been examined is less than a threshold value, receives as input from said input device similarity information relating to other labels that resemble said desired labels; and rewrites the values of said desired labels of learning data that are stored in said learning data memory unit to the values of other labels that are indicated by said similarity information.

**14.** An active learning method according to claim 12, wherein, in step "a," said control unit receives from an outside device learning data in which the values of said desired labels have been rewritten to the values of other labels and saves these learning data in said learning data memory unit.

**15.** A program for causing a computer that is equipped with a memory device, an input device, and an output device to function as:

a control means for:

treating as learning data data in which values of desired labels of data that are composed of a plurality of descriptors and a plurality of labels have been rewritten to values of other labels that indicate states of aspects that resemble aspects that are indicated by the desired labels, and
generating a set of said learning data in said memory device; and

an active learning means for:

when data in which said desired labels are desired values are taken as positive cases and other data are taken as negative cases, using data of positive cases and negative cases of learning data that are stored in said memory device to learn rules for, and, in response to an input of descriptors of any data, calculating a resemblance of these data to positive cases;
applying rules that have been learned to a set of candidate data, which have been stored beforehand in said memory device and for which said desired labels are unknown, to predict the resemblance of each item of candidate data to positive cases;
selecting data that are to be learned next based on prediction results;
supplying selected data from said output device;
regarding data in which actual values of said desired labels have been received as input from said input device, removing these data from the set of candidate data and adding these data to the set of learning data; and
repeating active learning cycles until completion conditions are met.

**16.** A program according to claim 15, wherein said control means includes:

learning settings acquisition means for, based on information of said desired labels that is received as input from said input device, examining a number of positive cases that are included in the set of learning data that have been stored beforehand in said memory device;
similarity information acquisition means for, when the number of positive cases that have been examined is less than a threshold value, receiving from said input device similarity information relating to other labels that resemble said desired labels; and
data label conversion means for rewriting values of said desired labels of learning data that have been stored in said memory device to values of other labels that are indicated by said similarity information.

**17.** A program according to claim 15, wherein said control means receives from an outside device learning data in which the values of said desired labels have been rewritten to values of other labels and saves the received data in said memory device.

Fig. 1

120 processing device
130 memory device
150 control unit
151
learning settings acquisition unit
131
learning data memory unit
152
similarity information acquisition unit
153
data label conversion unit
110
input/ output device
141
learning unit
132
rule memory unit
142
prediction unit
133
candidate data memory unit
143
candidate data selection unit
134
selection data memory unit
144
data updating unit
140 active learning unit

Fig. 2

201
202
202
202
203
203
203
204
identifier
descriptor 1
descriptor 2
...
descriptor n
label 1
label 2
...
label m
restoration information

Fig. 3

(a)

302
rule identifier 1
rule 1
301
302
rule identifier 2
rule 2
301
rule identifier p
rule p

(b)

IF (descriptor 1=1) and (descriptor 3=0) and (70<descriptor 6≦100) and (descriptor 8<90) THEN score :0.6

IF (descriptor 1=1) and (descriptor 3=1) and (70<descriptor 6≦80) and (descriptor 12>55) THEN score :0.2

•
•
•

Fig. 4

Start
Learning conditions are supplied.
S 401
number of positive cases < threshold value
S 402
NO
YES
acquire similarity information
S 403
rewrite values of desired labels of learning data
S 404
uses learning data to learn rules, and save these rules
S 405
apply these learned rules to each item of candidate data to calculate scores
S 406
select data update
S 407
update data
S 408
Completion conditions are met.
S 409
NO
YES
End

Fig. 5

| identifier | descriptor 1 | descriptor 2 | ... | descriptor n | label 1 | label 2 | ... | label m | restoration information |
|---|---|---|---|---|---|---|---|---|---|
| 1 | 1 | 1 | ... | 85 | 0 | 1 | ... | 0. 8 | |
| 2 | 0 | 1 | ... | 80 | 0 | 0 | ... | 0. 5 | |
| 3 | 1 | 0 | ... | 83 | 0 | 1 | ... | 0. 2 | |
| ⋮ | ⋮ | ⋮ | ⋱ | ⋮ | ⋮ | ⋮ | ⋱ | ⋮ | |
| x | 0 | 0 | ... | 68 | 0 | 0 | ... | 0. 7 | |

Fig. 6

| identifier | descriptor 1 | descriptor 2 | ... | descriptor n | label 1 | label 2 | ... | label m | restoration information |
|---|---|---|---|---|---|---|---|---|---|
| 1 | 1 | 1 | ... | 85 | 0→1 | 1 | ... | 0. 8 | label numbers 1、「0」 |
| 2 | 0 | 1 | ... | 80 | 0 | 0 | ... | 0. 5 | |
| 3 | 1 | 0 | ... | 83 | 0→1 | 1 | ... | 0. 2 | label numbers 1、「0」 |
| ⋮ | ⋮ | ⋮ | ⋱ | ⋮ | ⋮ | ⋮ | ⋱ | ⋮ | |
| x | 0 | 0 | ... | 68 | 0 | 0 | ... | 0. 7 | |

Fig. 7

120 processing device
130 memory device
150 control unit
151
learning settings acquisition unit
131
learning data memory unit
152
similarity information acquisition unit
153
data label conversion unit
701
data weighting unit
110
input/ output device
141
learning unit
132
rule memory unit
142
prediction unit
133
candidate data memory unit
143
candidate data selection unit
134
selection data memory unit
144
data updating unit
140 active learning unit

Fig. 8

201
202
202
202
203
203
203
204
801
identifier
descriptor 1
descriptor 2
...
descriptor n
label 1
label 2
...
label m
restoration information
weight

Fig. 9

Start
Learning conditions are supplied.
S 401
number of positive cases < threshold value
S 402
NO
YES
acquire similarity information
S 403
rewrite values of desired labels of learning data
S 404
set values in the weight value for items of learning data
S 901
uses learning data to learn rules, and save these rules
S 405
apply these learned rules to each item of candidate data to calculate scores
S 406
select data update
S 407
update data
S 408
Completion conditions are met
S 409
NO
YES
End

Fig. 10

120 processing device
130 memory device
150 control unit
151
learning settings acquisition unit
131
learning data memory unit
152
similarity information acquisition unit
153
data label conversion unit
1001
provisional settings batch release unit
110
input/ output device
141
learning unit
132
rule memory unit
142
prediction unit
133
candidate data memory unit
143
candidate data selection unit
134
selection data memory unit
144
data updating unit
140 active learning unit

Fig. 11

Start
Learning conditions are supplied.
S401
number of positive cases < threshold value
S402
NO
YES
acquire similarity information
S403
rewrite values of desired labels of learning data
S404
uses learning data to learn rules, and save these rules
S405
apply these learned rules to each item of candidate data to calculate scores
S406
select data update
S407
update data
S408
Completion conditions are met.
S409
YES
End
NO
Provisional settings batch release is completed.
S1101
YES
NO
Provisional settings batch release conditions are met.
S1102
NO
YES
data label batch inverse conversion
S1103

Fig. 12

| identifier | descriptor 1 | descriptor 2 | ... | descriptor n | label 1 | label 2 | ... | label m | restoration information |
|---|---|---|---|---|---|---|---|---|---|
| 1 | 1 | 1 | ... | 85 | 1 | 1 | ... | 0.8 | label numbers 1、「0」 |
| 2 | 0 | 1 | ... | 80 | 0 | 0 | ... | 0.5 | |
| 3 | 1 | 0 | ... | 83 | 1 | 1 | ... | 0.2 | label numbers 1、「0」 |
| ⋮ | ⋮ | ⋮ | ⋱ | ⋮ | ⋮ | ⋮ | ⋱ | ⋮ | |
| x | 0 | 0 | ... | 68 | 0 | 0 | ... | 0.7 | |
| x+1 | 0 | 1 | ... | 80 | 1 | 1 | ... | 0.8 | |
| ⋮ | ⋮ | ⋮ | ⋱ | ⋮ | ⋮ | ⋮ | ⋱ | ⋮ | |
| x+a | 1 | 0 | ... | 85 | 1 | 0 | ... | 0.6 | |

Fig. 13

| identifier | descriptor 1 | descriptor 2 | ... | descriptor n | label 1 | label 2 | ... | label m | restoration information |
|---|---|---|---|---|---|---|---|---|---|
| 1 | 1 | 1 | ... | 85 | 0 | 1 | ... | 0.8 | |
| 2 | 0 | 1 | ... | 80 | 0 | 0 | ... | 0.5 | |
| 3 | 1 | 0 | ... | 83 | 0 | 1 | ... | 0.2 | |
| ⋮ | ⋮ | ⋮ | ⋱ | ⋮ | ⋮ | ⋮ | ⋱ | ⋮ | |
| x | 0 | 0 | ... | 68 | 0 | 0 | ... | 0.7 | |
| x+1 | 0 | 1 | ... | 80 | 1 | 1 | ... | 0.8 | |
| ⋮ | ⋮ | ⋮ | ⋱ | ⋮ | ⋮ | ⋮ | ⋱ | ⋮ | |
| x+a | 1 | 0 | ... | 85 | 1 | 0 | ... | 0.6 | |

Fig. 14

120 processing device
130 memory device
150 control unit
151
learning settings acquisition unit
131
learning data memory unit
152
similarity information acquisition unit
153
data label conversion unit
1401
provisional settings gradual release unit
110
input/ output device
141
learning unit
132
rule memory unit
142
prediction unit
133
candidate data memory unit
143
candidate data selection unit
134
selection data memory unit
144
data updating unit
140 active learning unit

Fig. 15

Start
Learning conditions are supplied.
S 401
number of positive cases < threshold value
S 402
NO
YES
acquire similarity information
S 403
rewrite values of desired labels of learning data
S 404
uses learning data to learn rules, and save these rules
S 405
apply these learned rules to each item of candidate data to calculate scores
S 406
select data update
S 407
update data
S 408
Completion conditions are met.
S 409
YES
End
NO
All of the provisional positive cases are returned to the state that preceded label conversion.
S 1501
YES
NO
Provisional settings gradual release conditions are met.
S 1502
NO
YES
data label part inverse conversion
S 1503

Fig. 16

120 processing device
130 memory device
150 control unit
151
learning settings acquisition unit
131
learning data memory unit
152
similarity information acquisition unit
153
data label conversion unit
1601
provisional settings batch release unit
110
input/ output device
132
rule memory unit
141
learning unit
142
prediction unit
133
candidate data memory unit
143
candidate data selection unit
134
selection data memory unit
144
data updating unit
140 active learning unit

Fig. 17

| identifier | descriptor 1 | descriptor 2 | ... | descriptor n | label 1 | label 2 | ... | label m | restoration information |
|---|---|---|---|---|---|---|---|---|---|
| 1 | 1 | 1 | ... | 85 | ? | 1 | ... | 0. 8 | |
| 2 | 0 | 1 | ... | 80 | ? | 0 | ... | 0. 5 | |
| 3 | 1 | 0 | ... | 83 | ? | 1 | ... | 0. 2 | |
| ⋮ | ⋮ | ⋮ | ⋱ | ⋮ | ⋮ | ⋮ | ⋱ | ⋮ | |
| y | 0 | 0 | ... | 68 | ? | 0 | ... | 0. 7 | |

Fig. 18

Start
Learning conditions are supplied.
S 401
number of positive cases < threshold value
S 402
NO
YES
acquire similarity information
S 403
rewrite values of desired labels of learning data
S 404
uses learning data to learn rules, and save these rules
S 405
apply these learned rules to each item of candidate data to calculate scores
S 406
select data update
S 407
update data
S 408
Completion conditions are met.
S 409
YES
End
NO
Provisional settings batch release is completed.
S 1101
YES
NO
Provisional settings batch release conditions are met.
S 1102
NO
YES
data label batch inverse conversion
S 1103
If the desired labels of the data are unknown, these data are moved from learning data memory unit to candidate data memory unit.
S 1801

Fig. 19

| identifier | descriptor 1 | descriptor 2 | ... | descriptor n | label 1 | label 2 | ... | label m | restoration information |
|---|---|---|---|---|---|---|---|---|---|
| 1 | 1 | 1 | ··· | 85 | 1 | 1 | ··· | 0. 8 | label numbers 1、「?」 |
| 2 | 0 | 1 | ··· | 80 | 0 | 0 | ··· | 0. 5 | label numbers 1、「?」 |
| 3 | 1 | 0 | ··· | 83 | 1 | 1 | ··· | 0. 2 | label numbers 1、「?」 |
| ⋮ | ⋮ | ⋮ | ⋱ | ⋮ | ⋮ | ⋮ | ⋱ | ⋮ | |
| x | 0 | 0 | ··· | 68 | 0 | 0 | ··· | 0. 7 | label numbers 1、「?」 |
| x+1 | 0 | 1 | ··· | 80 | 1 | 1 | ··· | 0. 8 | |
| ⋮ | ⋮ | ⋮ | ⋱ | ⋮ | ⋮ | ⋮ | ⋱ | ⋮ | |
| x+a | 1 | 0 | ··· | 85 | 1 | 0 | ··· | 0. 6 | |

Fig. 20

120 processing device
130 memory device
150 control unit
151
learning settings acquisition unit
131
learning data memory unit
152
similarity information acquisition unit
153
data label conversion unit
2001
provisional settings gradual release unit
110
input/ output device
141
learning unit
132
rule memory unit
142
prediction unit
133
candidate data memory unit
143
candidate data selection unit
134
selection data memory unit
144
data updating unit
140 active learning unit

Fig. 21

input/
output
device
2102
2101
processing device
120 processing device
130 memory device
150
control unit
131
learning data
memory unit
141
learning unit
132
rule memory
unit
142
prediction unit
133
candidate
data memory
unit
143
candidate data
selection unit
134
selection
data memory
unit
110
input/
output
device
144
data updating unit
140 active learning unit

European Patent Office

# EUROPEAN SEARCH REPORT

Application Number
EP 06 25 2296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | PATENT ABSTRACTS OF JAPAN vol. 2000, no. 02, 29 February 2000 (2000-02-29) & JP 11 316754 A (NEC CORP; REAL WORLD COMPUTING PARTNERSHIP), 16 November 1999 (1999-11-16) * abstract * | 1-17 | INV. G06N5/02 |
| D,A | US 2005/071301 A1 (KUROIWA YUKIKO) 31 March 2005 (2005-03-31) * abstract * * paragraph [0006] * * paragraphs [0019], [0020] * * paragraph [0070] * * paragraphs [0091] - [0104] * * paragraphs [0141] - [0145] * | 1-17 | |
| D,A | M.K. WARMUTH, J LIAO, G RÄTSCH, M MATHIESON, S PUTTA, C LEMMEN: "Active Learning with Support Vector Machines in the Drug Discovery Process" JOURNAL OF CHEMICAL INFORMATION AND COMPUTER SCIENCES, vol. 43, no. 1, 31 January 2003 (2003-01-31), XP002394233 * the whole document * | 1-17 | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 9 August 2006 | Valencia, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 25 2296

This annex lists the patent family members relating to the patent documents cited in the above-mentioned European search report. The members are as contained in the European Patent Office EDP file on
The European Patent Office is in no way liable for these particulars which are merely given for the purpose of information.

09-08-2006

| Patent document cited in search report | | Publication date | Patent family member(s) | Publication date |
|---|---|---|---|---|
| JP 11316754 | A | 16-11-1999 | NONE | |
| US 2005071301 | A1 | 31-03-2005 | JP 2005107743 A | 21-04-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11316754 A
- JP 2005107743 A


### Non-patent literature cited in the description


- **MANFRED K. WARMUTH.** Active Learning with support Vector Machines in the Drug Discovery Process. *Journal of Chemical Information and Computer Sciences,* January 2003, vol. 43 (1